# EUROPEAN PATENT APPLICATION

(11) **EP 2 808 710 A1**
(43) Date of publication of application: **03.12.2014**
(21) Application number: 13741551.9
(22) Date of filing: 22.01.2013
(51) Int. Cl.: G02B 5/28, B32B 7/02, B32B 27/30, B32B 27/36, G02B 5/26

(54) **OPTICAL FILM**

(30) Priority: 25.01.2012 JP 2012013006
(71) Applicant: Konica Minolta Advanced Layers, Inc., Hachioji-shi, Tokyo 192-8505 (JP)
(72) Inventor: SAITO, Yoichi, Tokyo, 100-7015 (JP)
(74) Representative: Gille Hrabal
(86) International application number: PCT/JP2013/051172
(87) International publication number: WO 2013/111735

(57) **Abstract**

To provide an optical film that shows small change in color over time and is excellent in infrared reflectance and durability. An optical film having a laminated body including a high-refractive index layer and a low-refractive index layer on a substrate, wherein the layer adjacent to the substrate contains at least one kind selected from the group consisting of a modified polyvinyl alcohol and an aqueous polyester resin modified with a vinyl monomer.

## Description

### TECHNICAL FIELD

The present invention relates to an optical film.

### BACKGROUND ART

In recent years, many window films that are laminated to the window glass surfaces of buildings are used. One of those include films having a function to suppress the entering of infrared ray to thereby prevent the excessive raising of the room temperatures in buildings, and the films decrease the use of cooling apparatuses to thereby attain energy saving.

As a method for cutting infrared ray, infrared ray-absorbing type films formed by disposing an infrared ray absorbing layer containing an infrared ray absorber on a film, infrared ray-reflective type films formed by disposing a layer that reflects infrared ray on a film, films having both of these functions, and the like have been placed on the market.

Especially, there is a film technique for laminating a dielectric layer for infrared ray-reflective type films, and a method for alternately laminating layers having different refractive indices by an application process including coating the surface of a substrate with an application solution to effect laminating (for example, see Patent Literatures 1 and 2), a lamination of a laminated thin film containing metallic silver having a three-layer structure of tungsten oxide having specific film thicknesses on the surface of a polyester film/silver/tungsten oxide (for example, see Patent Literature 3) and the like are disclosed.

### Citation List

### Patent Literature

Patent Literature 1: Japanese Patent Application Laid-Open No. Hei 8-110401
Patent Literature 2: Japanese Patent Application Laid-Open No. 2007-331296
Patent Literature 3: Japanese Patent Application Laid-Open No. Sho 56-32352

### SUMMARY OF INVENTION

However, when the infrared reflective films described in the above-mentioned patent literatures were laminated on a glass, there is a problem that the films discolored from the laminated end portions.

Therefore, the present invention aims to provide an optical film that shows small change in color over time and is excellent in infrared reflectance and durability.

The present inventor has performed intensive studies in view of the above-mentioned problem, and, as a result, surprisingly found that an optical film that shows small change in color over time and is excellent in infrared reflectance and durability can be obtained by incorporating at least one selected from the group consisting of a modified polyvinyl alcohol and an aqueous polyester resin modified with a vinyl monomer in a layer adjacent to a substrate, and completed the present invention.

That is, the above-mentioned object of the present invention is achieved by the following constitutions.
1. An optical film having a laminated body including a high-refractive index layer and a low-refractive index layer on a substrate, wherein a layer adjacent to the substrate contains at least one kind selected from the group consisting of a modified polyvinyl alcohol and an aqueous polyester resin modified with a vinyl monomer.
2. The optical film described in the above item 1. , wherein the layer adjacent to the substrate is a layer other than the laminated body.
3. The optical film described in the above item 2., wherein the layer adjacent to the substrate contains the modified polyvinyl alcohol, and the application amount of the modified polyvinyl alcohol in the layer adjacent to the substrate is from 0.01 to 1 g/m².
4. The optical film described in any one of the above items 1. to 3., wherein the layer adjacent to the substrate further contains a hardener.
5. The optical film described in the above item 4., wherein the hardener is an acrylamide-based hardener or an epoxy-based hardener.
6. An infrared shielding body being formed by being provided with the optical film described in the above items 1 to 5 disposed on at least one surface of a base structure.

### DESCRIPTION OF EMBODIMENTS

The present invention is an optical film having a laminated body including a high-refractive index layer and a low-refractive index layer on a substrate, wherein a layer adjacent to the substrate contains at least one selected from the group consisting of a modified polyvinyl alcohol and an aqueous polyester resin modified with a vinyl monomer.

When an existing infrared reflective film was laminated on a glass, there was a problem that the film discolored from the laminated end portions. It is considered that this phenomenon arises by the deterioration of the infrared reflective layer due to the entering of water content and oxygen from the laminated end portions.

On the other hand, the optical film of the present invention contains at least one selected from the group consisting of a modified polyvinyl alcohol and an aqueous polyester resin modified with a vinyl monomer in the layer adjacent to the substrate. Since the above-mentioned modified polyvinyl alcohol and the above-mentioned aqueous polyester resin modified with a vinyl monomer have suitable hydrophobicity, it is considered that they prevent the entering of water content and oxygen into the infrared reflective layer from the laminated end portions. Therefore, the optical film of the present invention shows small change in color over time and is excellent in infrared reflectance and durability.

The above-mentioned mechanism is inferential, and the present invention is not limited by the above-mentioned mechanism at all.

As the elemental optical properties of the optical filmof the present invention, the transmittance in the visible ray region shown by JIS R3106 : 1998 is preferably 40% or more, more preferably 60% or more. Furthermore, the reflectance of the area at the wavelength from 900 nm to 1,400 nm is preferably 50% or more, and more preferably 70% or more. In addition, the transmittance of the area at the wavelength from 900 nm to 1,400 nm is 30% or less.

Hereinafter the constitutional factors of the optical film of the present invention will be explained in detail.

### [Substrate (Support)]

The substrate (support) used in the optical film of the present invention is preferably a film support. The film support may be either transparent or opaque, and various resin films can be used. Specific examples thereof can include respective resin films such as polyolefin films (polyethylene, polypropylene and the like), polyester films (polyethylene telephthalate, polyethylene naphthalate and the like), polyvinyl chloride, cellulose triacetate, polycarbonates, polyarylates, polystyrenes (PS), aromatic polyamides, polyether ether ketones, polysulfones, polyethersulfones, polyimides and polyetherimides, as well as resin films formed by laminating two or more layers of the above-mentioned resin films. From the viewpoints of costs and availability, polyethylene telephthalate (PET), polyethylene naphthalate (PEN), polycarbonate (PC) and the like are preferably used.

The thickness of the substrate according to the present invention is preferably from 5 to 200 µm, more preferably from 15 to 150 µm. Two or more substrates may be superposed, and in this case, the kinds of the substrates may be the same or different from each other.

Furthermore, the substrate according to the present invention has a transmittance in the visible ray region shown by JIS R3106: 1998 of preferably 85% or more, more preferably 90% or more. When the transmittance is within such range, it is preferable since the transmittance is advantageous for adjusting the transmittance in the visible ray region shown by JIS R3106 : 1998 in the case when an optical film is formed to 40% or more.

The substrate according to the present invention can be produced by a conventionally-known, general method. For example, an unstretched substrate, which is substantially formless and not oriented can be produced by melting a resin as a material by an extruder, extruding the resin by a ring-shaped dye or a T-die, and quenching. Furthermore, a stretched support can be produced by stretching the unstretched substrate in the flow (longitudinal axis) direction of the substrate, or in the direction orthogonal to the flow direction (transverse axis) of the substrate, by a well-known method such as uniaxial stretching, tenter type sequential biaxial stretching, tenter type simultaneous biaxial stretching or tubular type simultaneous biaxial stretching. The draw ratio in this case can be suitably selected in accordance with the resin as the raw material of the substrate, and is preferably from 2 to 10 times in the longitudinal axis direction and transverse axis direction, respectively.

Although the substrate may be either an unstretched film or a stretched film as mentioned above, a stretched film is preferable from the viewpoints of improvement of strength, suppression of thermal inflation, and the like.

Furthermore, a relaxation treatment or an offline heat treatment can be performed on the substrate according to the present invention in view of dimensional stability. The relaxation treatment is preferably performed by performing thermal fixing in the step of stretching film formation of the above-mentioned polyester film, and performing a step of winding in a tenter for transversal stretching or after the ejection of the film from the tenter. The relaxation treatment is performed at a treatment temperature of preferably from 80 to 200°C, more preferably from 100 to 180°C. Furthermore, the treatment is performed preferably at a relaxation rate within the range from 0.1 to 10% in both the longitudinal direction and width direction, more preferably at a relaxation rate of from 2 to 6%. The support subjected to the relaxation treatment improves heat-resistance and finer dimensional stability by undergoing the above-mentioned offline heat treatment.

It is preferable to apply an application liquid for a undercoating layer by in-line on one surface or both surfaces of the substrate according to the present invention. In the present invention, the application of a unercoating in the step for film formation is referred to in-line unercoating application. As the resin used for the application liquid for the undercoating layer useful in the present invention, polyester resins, acrylic-modified polyester resins, polyurethane resins, acrylic resins, acrylic-melamine resins, vinyl resins, vinylidene chloride resins, polyethyleneimine vinylidene resins, polyethyleneimine resins, polyvinyl alcohol resins, modified polyvinyl alcohol resins or gelatin, and these may be used singly or by mixing two or more types thereof. Conventionally well-known additives can be added to these undercoating layers. The above-mentioned undercoating layer can be coated by a well-known method such as roll coating, gravure coating, knife coating, dip coating or spray coating. The application amount of the undercoating layer is preferably from about 0.01 to 2 g/m² (dried state).

### [Laminated Body]

The optical film of the present invention has a laminated body including a high-refractive index layer and a low-refractive index layer. The above-mentioned laminated body preferably contains at least one unit formed of a high-refractive index layer including a first water-soluble polymer and first metal oxide particles, and a low-refractive index layer including a second water-soluble polymer and second metal oxide particles.

It is preferable that the laminated body is such that the difference in refractive indices of the high-refractive index layer and low-refractive index layer is larger, from the viewpoint that the infrared reflectance can be increased with a smaller stack number. In the present invention, it is preferable that the difference in refractive indices of the adjacent high-refractive index layer and low-refractive index layer is 0.2 or more in at least two or more units each constituted by the high-refractive index layer and low-refractive index layer. The difference in refractive indices is more preferably 0.3 or more, further preferably 0.4 or more.

The number of the units to be laminated is preferably 30 or less units, more preferably 20 or less units, further preferably 10 or less units, though depending on the difference in refractive indices of the high-refractive index layer and low-refractive index layer. It is preferable to decrease the number of the units since the haze tends to decrease.

In the present invention, the refractive indices of the high-refractive index layer and low-refractive index layer can be obtained according to the following method.

A sample is prepared by applying each refractive index layer whose refractive index is to be measured as a single layer on a substrate, this sample is cut into 10 cm x 10 cm, and the refractive index is obtained according to the following method. Using a Type U-4000 (manufactured by Hitachi Corporation) as a spectrometer, the rear surface to be measured of each sample is subj ected to a surface roughening treatment, a light absorption treatment is performed by using a black spray to prevent the reflection of light on the rear surface, the reflectance in the visible ray region (400 nm to 700 nm) is measured on 25 points under a condition of 5° regular reflection, an average value is obtained, and an average refractive index is obtained from the measurement result.

The refractive index of the high-refractive index layer in the present invention is preferably from 1.70 to 2.50, more preferably from 1.80 to 2.20. Furthermore, the low-refractive index layer has a refractive index of preferably from 1.10 to 1.60, more preferably from 1.30 to 1.50.

The constitutions of the high-refractive index layer and low-refractive index layer will be explained below.

### <Water-soluble polymer>

Examples of the above-mentioned first water-soluble polymer and the above-mentioned second water-soluble polymer include gelatins, synthetic resins, polysaccharide thickeners, inorganic polymers, and the like. These first water-soluble polymers and second water-soluble polymers may be used singly or in combinations of two or more types thereof. Furthermore, synthetic products may be used, or commercially available products may be used for the first water-soluble polymer and second water-soluble polymer. Furthermore, the first water-soluble polymer and second water-soluble polymer may be the same or different from each other. The water-soluble polymers will be explained below.

### (Gelatins)

As the gelatins used in the present invention, various gelatins that have been widely used since before in the field of photosensitive materials for silver halide photography can be exemplified. Examples may include acid-treated gelatins and alkali-treated gelatins, as well as enzyme-treated gelatins that are subjected to an enzymatic treatment in the process of the production of gelatin, and gelatin derivatives, i.e., modified gelatins each obtained by treating a gelatin having an amino group, an imino group, a hydroxyl group or a carboxyl group as a functional group in the molecule with a reagent having a group that can react with the functional group. General processes for the production of gelatins are well-known, and descriptions in T. H. James: The Theory of Photographic Process 4th. ed. 1977 (Macmillan) page 55, Handbook of Scientific Photographs (First Volume), page 72 to page 75 (Maruzen), Basis for Photographic Technology - Silver Halide Photography, page 119 to page 124 (Colona Publishing Co. , Ltd.) can be referred to. Furthermore, the gelatins described on page IX, Research Disclosure, Vol. 176, No. 17643 (December 1978) can be exemplified.

### (Synthetic Resin)

Examples of the synthetic resin used in the present invention include polyvinyl alcohols, polyvinylpyrrolidones, polyalkylene oxides, acrylic resins such as polyacrylic acid, acrylic acid-acrylonitrile copolymers, potassium acrylate-acrylonitrile copolymers, vinyl acetate-acrylic acid ester copolymers or acrylic acid-acrylic acid ester copolymers, styrene acrylic acid resins such as styrene-acrylic acid copolymers, styrene-methacrylic acid copolymers, styrene-methacrylic acid-acrylic acid ester copolymers, styrene-α-methylstyrene-acrylic acid copolymers or styrene-α-methylstyrene-acrylic acid-acrylic acid ester copolymers, styrene-sodium styrene sulfonate copolymers, styrene-2-hydroxyethyl acrylate copolymers, styrene-2-hydroxyethyl acrylate-potassium styrene sulfonate copolymers, styrene-maleic acid copolymers, styrene-maleic anhydride copolymers, vinylnaphthalene-acrylic acid copolymers, vinylnaphthalene-maleic acid copolymers, and vinyl acetate-based copolymers such as vinyl acetate-maleic acid ester copolymers, vinyl acetate-crotonic acid copolymers and vinyl acetate-acrylic acid copolymers, and salts thereof. Furthermore, copolymers formed by copolymerizing two or more of the polymers exemplified above are also used.

Among these, polyvinyl alcohols are preferable.

The polyvinyl alcohols that are preferably used in the laminated body include general polyvinyl alcohols that are obtained by hydrolyzing polyvinyl acetate, as well as polyvinyl alcohols having a cationic group, polyvinyl alcohols having an anionic group, polyvinyl alcohols having a nonionic group, and the like.

As the polyvinyl alcohols obtained by hydrolyzing vinyl acetate, polyvinyl alcohols having an average polymerization degree of 1,000 or more are preferably used, and especially, polyvinyl alcohols having an average polymerization degree of from 1,500 to 5,000 are preferably used. Furthermore, the polyvinyl alcohols have a saponification degree of preferably from 70 to 100%, more preferably from 80 to 99.5%.

Examples of the polyvinyl alcohols having a cationic group include polyvinyl alcohols having a primary to tertiary amino group or a quaternary ammonium group in the main chain or side chain as those described in Japanese Patent Application Laid-Open No. Sho 61-10483, and those can be obtained by saponifying a copolymer of an ethylenically unsaturated monomer having a cationic group and vinyl acetate.

Examples of the ethylenically unsaturated monomer having a cationic group may include trimethyl-(2-acrylamide-2,2-dimethylethyl)ammonium chloride, trimethyl-(3-acrylamide-3,3-dimethylpropyl)ammonium chloride, N-vinylimidazole, N-vinyl-2-methylimidazole, N-(3-dimethylaminopropyl)metacrylamide, hydroxyethyl trimethylammonium chloride, trimethyl-(2-metacrylamidepropyl)ammonium chloride, N-(1,1-dimethyl-3-dimethylaminopropyl)acrylamide and the like. The ratio of the cationic group-containing ethylenically unsaturated monomer in the cation-modified polyvinyl alcohol is preferably 0.1 to 10 mol% , more preferably 0.2 to 5 mol% with respect to the vinyl acetate.

Examples of the polyvinyl alcohols having an anionic group include the polyvinyl alcohol having an anionic group as described in Japanese Patent Application Laid-Open No. Hei 1-206088, the copolymers of a vinyl alcohol and a vinyl compound having a water-soluble group as described in Japanese Patent Application Laid-Open No. Sho 61-237681 and Sho 63-307979, the modified polyvinyl alcohol having a water-soluble group as described in Japanese Patent Application Laid-Open No. Hei 7-285265, or silanol-modified polyvinyl alcohols.

Furthermore, examples of the polyvinyl alcohols having a nonionic group include the polyvinyl alcohol derivative in which a polyalkylene oxide group is added to a part of a vinyl alcohol as described in Japanese Patent Application Laid-Open No. Hei 7-9758, and the block copolymer of a vinyl compound having a hydrophobic group and a vinyl alcohol as described in Japanese Patent Application Laid-Open No. Hei 8-25795. Two or more types of polyvinyl alcohols that differ in polymerization degrees, types of modification, and the like can be used in combination.

Furthermore, at least one selected from the group consisting of a modified polyvinyl alcohol and an aqueous polyester resin modified with a vinyl monomer, which is contained in the layer adjacent to the substrate mentioned below, can also be used as the water-soluble polymer in the above-mentioned high-refractive index layer and the above-mentioned low-refractive index layer. The details of the modified polyvinyl alcohol and the aqueous polyester resin modified with a vinyl monomer will be described below.

The form of the copolymer in the case when the above-mentioned synthetic resin is a copolymer may be any of a block copolymer, a random copolymer, a graft copolymer and an alternate copolymer.

### (Polysaccharide thickener)

The polysaccharide thickener used in the present invention is not especially limited, and examples can include generally-known natural simple polysaccharides, natural composite polysaccharides, synthetic simple polysaccharides and synthetic composite polysaccharides. For the details of these polysaccharide thickeners, "Encyclopedia of Biochemistry (Second Edition)", (Tokyo Kagaku Dojin), "Food Industry", Vol. 31 (1988), page 21, and the like can be referred to.

The above-mentioned polysaccharide thickener is a polymer of a saccharide, which has many hydrogen bond groups in the molecule, and is a polysaccharide having a property that the difference between the viscosity at a low temperature and the viscosity at a high temperature is significant due to the difference in hydrogen bonding forces among the molecules depending on temperatures, and when metal oxide particles or a polyvalent metal compound is added thereto, the polysaccharide causes increase in viscosity or gelation by forming hydrogen bonding or ion bonding with the metal oxide particles or polyvalent metal compound by the reaction with the metal oxide particles or polyvalent metal compound at a low temperature. The width of the increase in the viscosity is preferably 1 mPa s or more at the viscosity at 15°C, as compared to the viscosity at 15°C prior to the addition of the metal oxide particles or polyvalent metal compound. The width of the increase in the viscosity is more preferable 5 mPa·s or more, further preferably 10 mPa·s or more. Meanwhile, in the present specification, values measured by a Brookfield viscosity meter are adopted as the viscosities.

Further specific examples of the polysaccharide thickener that can be applied to the present invention include β-1,4-glucans (for example, carboxymethyl cellulose, carboxyethyl cellulose and the like), galactans (for example, agarose, agaropectin, and the like), galactomannoglycans (for example, locust bean gum, guaran, and the like), xyloglucans (for example, tamarind gum, and the like), glucomannnoglycans (for example, konjac mannan, wood-derived glucomannan, xanthane gum, and the like), galactoglucomannnoglycans (for example, glycans derived fromconifers), arabinogalactoglycans (for example, glycan derived from soybean, glycins derived from microorganisms, and the like), glucolamnoglycans (for example, gellan gum, and the like), glycosaminoglycans (for example, hyarulonic acid, keratan sulfate, and the like), natural polymer polysaccharides derived from Rhodophyceae such as arginic acid and arginate salts, agar, κ-carrageenan, λ-carrageenan, i-carrageenan and furcellaran.

### (Inorganic polymer)

Although the inorganic polymer used in the present invention is not especially limited, it is preferable to use an inorganic polymer such as a compound containing a zirconium atom or a compound containing an aluminum atom.

Zirconium oxide is excepted from the compound containing a zirconium atom that can be applied to the present invention, and specific examples of the compound include zirconium difluoride, zirconium trifluoride, zirconium tetrafluoride, hexafluorozirconate salts (for example, potassium salt), heptafluorozirconate salts (for example, sodium salt, potassium salt and ammonium salt), octafluorozirconate salts (for example, lithium salt), zirconium oxide fluoride, zirconium dichloride, zirconium trichloride, zirconium tetrachloride, hexachlorozirconate salts (for example, sodium salt or potassium salt), zirconium acid chloride (zirconyl chloride), zirconium dibromide, zirconium tribromide, zirconium tetrabromide, zirconium bromide oxide, zirconium triiodide, zirconium tetraiodide, zirconium peroxide, zirconium hydroxide, zirconium sulfide, zirconium sulfate, zirconium p-toluenesulfonate, zirconyl sulfate, sodium zirconyl sulfate, acidic zirconyl sulfate trihydrate, zirconium potassium sulfate, zirconium serenate, zirconium nitrate, zirconyl nitrate, zirconium phosphate, zirconyl carbonate, zirconylammonium carbonate, zirconium acetate, zirconyl acetate, zirconyl ammonium acetate, zirconyl lactate, zirconyl citrate, zirconyl stearate, zirconyl phosphate, zirconium oxalate, zirconium isopropylate, zirconium butyrate, zirconium acetylacetonate, acetylacetonezirconium butyrate, zirconium sterate butyrate, zirconium acetate, bis(acetylacetonato)dichlorozirconium, tris(acetylacetonato)chlorozirconium, and the like.

Among these compounds, zirconyl chloride, zirconyl sulfate, sodiumzirconylsulfate, zirconylsulfatetrihydrate, zirconyl nitrate, zirconyl carbonate, zirconyl ammonium carbonate, zirconyl acetate, zirconyl ammonium acetate and zirconyl stearate are preferable, and zirconyl carbonate, zirconyl ammonium carbonate, zirconyl acetate, zirconyl nitrate and zirconyl chloride are more preferable, and zirconyl ammonium carbonate, zirconyl chloride and zirconyl acetate are further preferable.

As the compound containing a zirconium atom, a commercially available product may be used, or a synthesized product may be used. Specific examples of the commercially available product include Zircosol ZA-20 (zirconyl acetate), Zircosol ZC-2 (zirconyl chloride) and Zircosol ZN (zirconyl nitrate) (these are manufactured by Daiichi Kigenso Kagaku Kogyo Co., Ltd.).

The structural formulas of typical compounds among the above-mentioned inorganic polymers containing a zirconium atom are shown below.

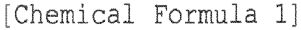

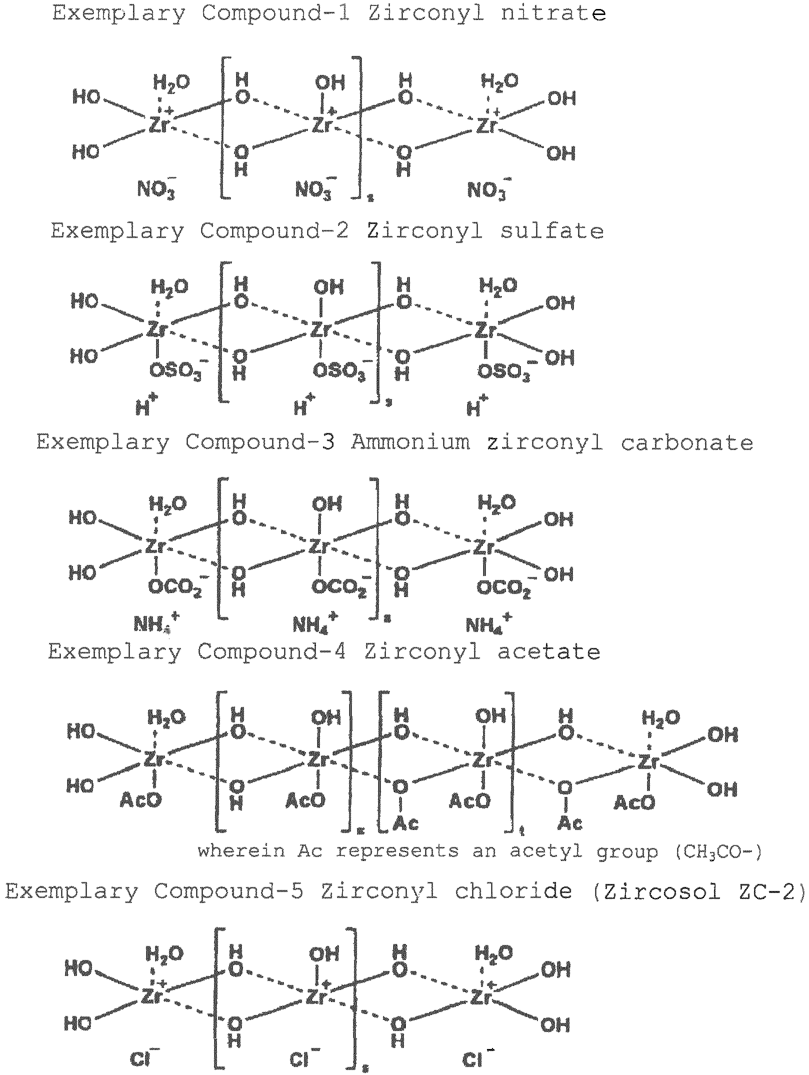

In the above-mentioned formulas, s and t represent integers of 1 or more.

The compounds containing a zirconium atom may be used singly or by combinating two or more diffferent types thereof.

Furthermore, aluminum oxide is excepted from the compounds containing an aluminum atom that can be applied to the present invention, and specific examples of the compounds include aluminum fluoride, hexafluoro aluminate (for example, potassium salt), aluminum chloride, basic aluminum chloride (for example, aluminum polychloride), tetrachloro aluminate (for example, sodium salt), aluminum bromide, tetrabromo aluminate (for example, potassium salt), aluminum iodide, aluminates (for example, sodium salt, potassium salt, calcium salt), aluminum hydrochloride, aluminum perchlorate, aluminum thiocyanate, aluminum sulfate, basic aluminum sulfate, basic aluminum silicate sulfate, aluminum potassium sulfate (alum), ammonium aluminum sulfate (ammoniumalum), sodiumaluminumsulfate, aluminumphosphate, aluminum nitrate, aluminum hydrogen phosphate, aluminum carbonate, polyaluminum sulfate silicate, aluminum formate, aluminum acetate, aluminum lactate, aluminum oxalate, aluminum isopropylate, aluminum butyrate, ethyl acetate aluminum diisopropylate, aluminum tris(acetylacetonate), aluminum tris (ethylacetoacetate) and aluminum monoacetyl acetonate bis(ethylacetoacetonate).

Among these, aluminum chloride, basic aluminum chloride, aluminum sulfate, basic aluminum sulfate, and basic aluminum sulfate silicate are preferable, and basic aluminum chloride and basic aluminum sulfate are even more preferable.

As the compound containing an aluminum atom, a commercially available product may be used, or a synthetic product may be used. Specific examples of the commercially available product include Takibine (registered trademark) #1500, which is polyaluminum chloride (PAC) manufactured by Taki Chemical Co., Ltd., polyaluminum hydroxide (Paho) manufactured by Asada Chemical Industry Co., Ltd., Co., Ltd. and Purachem WT manufactured by Rikengreen Co., Ltd.

The structural formula of Takibine (registered trademark) #1500 is shown below.

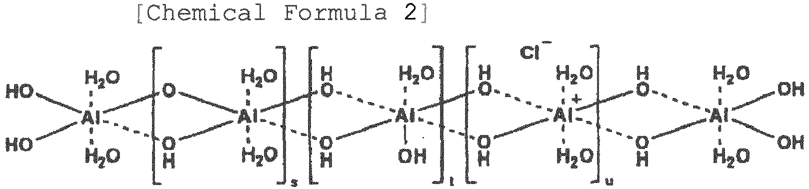

In the above-mentioned formula, s, t and u represent integers of 1 or more.

The weight-average molecular weights of the above-mentioned first water-soluble polymer and the above-mentioned second water-soluble polymer are preferably 1,000 to 200,000, more preferably 3,000 to 40, 000. In this specification, values measured by gel permeation chromatography (GPC) are adopted as the weight-average molecular weights.

### <Metal oxide particles>

Examples of the first metal oxide particles and second metal oxide particles include titanium oxide, zirconium oxide, zinc oxide, silicon dioxide, synthetic amorphous silica, colloidal silica, alumina, colloidal alumina, lead titanate, red lead, chrome yellow, zinc yellow, chromium oxide, ferric oxide, iron black, copper oxide, magnesium oxide, magnesium hydroxide, strontium titanate, yttrium oxide, niobium oxide, europeum oxide, lantanum oxide, zircon and tin oxide. These can be used singly or in combinations of two or more types thereof.

Among the above-mentioned metal oxide particles, as the first metal oxide particles to be incorporated in the high-refractive index layer, titanium oxide, zirconium oxide and zinc oxide are preferable, and titanium oxide is more preferable. Further specific examples of titanium oxide include anatase type titanium oxide, rutile type titanium oxide, brookite type titanium oxide, strontium titanate, or compounds obtained by doping these titanium oxides with different kind of metal atoms such as tin, barium, banadium, manganese, cobalt, nickel, gallium, aluminum, germanium, antimony, indium, palladium , ruthenium, rhodium, niobium, zirconium, magnesium, yttrium, lanthanum, europeum, zinc, lead, chromium, iron, copper, silver, gold, platinum, tungsten and cerium. The amount of doping is preferably from 0.001% by mass to 30% by mass. Furthermore, titanium oxides whose surfaces are treated with silica, alumina and the like are also preferable.

The titanium oxide that is preferably used in the present invention is a rutile type titanium oxide having a high refractive index and a low photocatalytic ability.

Furthermore, as an aspect of the titanium oxide that is preferable in the present invention, a titanium oxide sol in which microparticulate titanium oxide is dispersed in water or an organic solvent is preferable. The titanium oxide sol is preferable in view of the production of a laminated body since the titanium oxide sol is easily formed into an application liquid by mixing with a polymer, and the like.

As a method for preparing titanium oxide, for example, Japanese Patent Application Laid-Open No. Sho 63-17221, Hei 7-819, Hei9-165218 and Hei 11-43327 can be referred to.

Furthermore, as a method for the preparation of the other titanium oxides, for example, Japanese Patent Application Laid-Open No. Sho 63-17221, Hei 7-819, Hei 9-165218 and Hei 11-43327 can be referred to.

The primary particle diameter of the titanium oxide particles is preferably from 4 nm to 50 nm, more preferably from 4 nm to 30 nm in terms of volume average particle diameter.

The volume average particle diameter of the titanium oxide particles is an average particle diameter which is weighted by a volume represented by a volume average particle diameter mᵥ = {Σ (vᵢ ·dᵢ) } / {Σ (vᵢ)}, in the case when the particle diameters of arbitrary 1,000 particles aremeasuredby a method for observing particles themselves, and the volume per one particle is deemed as vi in a group of titanium-based oxide particles in which n₁, n₂ ... nᵢ ... nₖ particles respectively having particle diameters of d₁, d₂ ... dᵢ ... dₖ are respectively present by using a laser diffraction scattering method, a dynamic light scattering method or an electron microscope, or a method for observeing images of particles appeared on the cross-sectional surface or surface of a refractive index layer.

In the high-refractive index layer according to the present invention, the titanium oxide and the above-mentioned metal oxide may be mixed, or plural types of titanium oxides may be mixed and used.

In the low-refractive index layer according to the present invention, it is preferably to use silicon dioxide particles as the second metal oxide particles, and it is more preferable to use an acidic colloidal silica sol.

The silicon dioxide particles according to the present invention has an average particle diameter of preferably from 100 nm or less. The average particle diameter of the silicon dioxide primary particles that are dispersed in the state of primary particles (the particle diameter in the form of a dispersion liquid before application) is preferably 20 nm or less, more preferably 10 nm or less. Furthermore, the average particle diameter of the secondary particles is preferably 30 nm or less from the viewpoints of a low haze and excellent visible light permeability.

The content of the first water-soluble polymer in the high-refractive index layer is preferably 3 to 60% by mass, more preferably from 10 to 45% by mass, with respect to the total mass of the high-refractive index layer.

The content of the first metal oxide particles in the high-refractive index layer is preferably from 30 to 95% by mass, more preferably from 70 to 90% by mass, with respect to the total mass of the high-refractive index layer. A higher content is preferable from the viewpoint that the refractive index of the layer can further be improved.

The content of the second water-soluble polymer in the low-refractive index layer is preferably from 3 to 60% by mass, more preferably from 10 to 45% by mass, with respect to the total mass of the low-refractive index layer.

The content of the second metal oxide particles in the low-refractive index layer is preferably from 30 to 95% by mass, more preferably from 60 to 95% by mass, with respect to the total mass of the low-refractive index layer. When the content of the metal oxide is 30% by mass or more, the refractive index can further be lowered, whereas when the content of the metal oxide is 95% by mass or less, the flexibility of the film is improved, and thus the optical film can be formed more easily.

The thickness of the high-refractive index layer per one layer (the thickness after drying) is preferably from 20 to 1,000 nm, more preferably from 50 to 500 nm.

The thickness of the low-refractive index layer per one layer (the thickness after drying) is preferably from 20 to 800 nm, more preferably from 50 to 350 nm.

In the laminated body according to the present invention, a layer constitution in which the lowermost layer that is closest to the substrate is a low-refractive index layer and the uppermost layer is also a low-refractive index layer is preferable.

### [Additive]

Where necessary, various additives can be added to the high-refractive index layer and low-refractive index layer according to the present invention. The additive is explained below.

### <Hardener>

In the present invention, a hardener can also be used so as to harden the water-soluble polymer as a binder.

Although the hardener that can be applied to the present invention is not especially limited as long as it allows the crosslinking reaction of the water-soluble polymer, in the case when the water-soluble polymer is a polyvinyl alcohol, boric acid and salts thereof are preferable. Other well-known compounds can also be used, and are generally compounds having groups that can react with the water-soluble polymer, or compounds that promote the reaction between the different groups possessed by the water-soluble polymer, and are suitably selected and used depending on the kind of the water-soluble polymer. Specific examples of the hardener include epoxy-based hardeners (diglycidyl ethyl ether, ethylene glycol diglycidyl ether, 1,4-butanediol diglycidyl ether, 1,6-diglycidylcyclohexane, N,N-diglycidyl-4-glycidyloxyaniline, sorbitol polyglycidyl ether, glycerol polyglycidyl ether and the like), aldehyde-based hardeners (formaldehyde, glyoxal and the like), active halogen-based hardeners (2,4-dichloro-4-hydroxy-1,3,5-S-triazine and the like), active vinyl-based compounds (1,3,5-tris-acryloyl-hexahydro-S-triazine, bisvinylsulfonyl methyl ether and the like) and aluminum alum or the like.

### <Surfactant>

In the present invention, at least one of the high-refractive index layer and low-refractive index layer may further contain a surfactant. As the surfactant, either of anionic, cationic and nonionic surfactants can be used. More preferably, dialkylsulfosuccinate salt-based anionic surfactants, acetylene glycol-based nonionic surfactants, quaternary ammonium salt-based cationic surfactants or fluorine-based cationic surfactants are preferable.

The addition amount of the surfactant according to the present invention is in the range from preferably from 0.005 to 0.30% by mass, more preferably from 0.01 to 0.10% by mass, when the total mass of the application liquid for the high-refractive index layer or the application liquid for the low-refractive index layer is set as 100% by mass.

### <Amino acid>

In the present invention, at least one of the high-refractive index layer and low-refractive index layer may further contain an amino acid. By containing the amino acid, the dispersibility of the metal oxide particles in the high-refractive index layer or low-refractive index layer can be improved.

The above-mentioned amino acid as used herein means a compound having an amino group and a carboxyl group in the same molecule, and may be any type of amino acid such as α-, β- or γ-, and an amino acid having an isoelectric point of 6.5 or less is preferable. Some amino acids have optical isomers, but there is no difference in effects due to the optical isomers in the present invention, and any isomers can be used singly or as a racemate.

For the detailed explanation on the amino acid according to the present invention, the description on page 268 to page 270 of Chemical Encyclopedia 1, reduced edition (KyoritsuShuppan Co., Ltd.; published on 1960) can be referred to.

Specific examples of the amino acid can include glycine, alanine, valine, α-aminobutyric acid, γ-aminobutyric acid, β-alanine, serine, ε-amino-n-caproic acid, leucine, norleucine, phenylalanine, threonine, asparagine, aspartic acid, hystidine, lysine, glutamine, cystaine, methionine, proline and hydroxyproline, or the like. In order to use as an aqueous solution, the solubility at an isoelectric point is preferably 3 g or more with respect to 100 g of water, and glycine, alanine, serine, hystidine, lysine, glutamine, cystaine, methionine, proline, hydroxyproline, or the like is preferably used. From the viewpoint that the metal oxide particles have loose hydrogen bonds with the binder, it is more preferable to use serine or hydroxyproline, which has a hydroxyl group.

Since the positive and negative electrical charges in the molecule of an amino acid balance out at a specific pH, and the electrical charge as a whole becomes 0, and thus the isoelectric point of the amino acid refers to this pH value. In the present invention, it is preferable to use an amino acid having an isoelectric point of 6.5 or less. The isoelectric point of each amino acid can be obtained by isoelectric point electrophoresis at a low ion strength.

### <Lithium compound>

In the present invention, at least one of the high-refractive index layer and low-refractive index layer may further contain a lithium compound. The application liquid for the high-refractive index layer or the application liquid for the low-refractive index layer containing the lithium compound controls the viscosity more easily, and consequently, the production stability of the optical film is further improved.

The lithium compound that can be applied to the present invention is not especially limited, and examples include lithium carbonate, lithium sulfate, lithium nitrate, lithium acetate, lithium orotate, lithium citrate, lithium molybdenate, lithium chloride, lithium hydride, lithium hydroxide, lithiumbromide, lithium fluoride, lithium iodide, lithium stearate, lithium phosphate, lithium hexafluorophosphate, aluminum lithium hydride, lithium triethylborohydride, lithium triethoxyaluminum hydride, lithium tantalate, lithium hypochlorite, lithium oxide, lithium carbonate, lithium nitride, lithium niobate, lithium sulfate, lithium borate, LiBF₄, LiClO₄, LiPF₄ and LiCF₃SO₃ or the like. These lithium compounds can be used singly or in combinations of two or more types thereof.

Among these, lithium hydroxide is preferable from the viewpoint that the effect of the present invention can be sufficiently exerted.

The addition amount of the lithium compound is in the range from preferably from 0. 005 to 0.05 g, more preferably from 0.01 to 0.03 g per 1 g of the metal oxide particles that are present in the refractive index layer.

### <Emulsion resin>

In the present invention, the high-refractive index layer or low-refractive index layer may further contain an emulsion resin. By containing the emulsion resin, the flexibility of the film increases, and thus the processing properties such as attaching to a glass are improved.

The above-mentioned emulsion resin is a resin (preferably resin microparticles) obtained by retaining an oil-solublemonomer in an emulsion state in an aqueous solution containing a dispersant, and performing emulsification polymerization by using a polymerization initiator.

Examples of the dispersant used in the polymerization of the emulsion include low molecular weight dispersants such as alkylsulfonate salts, alkylbenzenesulfonate salts, diethylamine, ethylenediamine and quaternary ammonium salts, as well as polymer dispersants such as polyoxyethylene nonyl phenyl ethers, polyoxyethylene laurate ether, hydroxyethyl cellulose and polyvinyl pyrrolidone.

The emulsion resin used in the present invention is preferably a resin in which fine resin particles, for example, with an average particle diameter of from about 0.01 to 2 µm, are dispersed in an emulsion state in an aqueous medium, and can be obtained by emulsion polymerization of an oil-soluble monomer by using a polymer dispersant having a hydroxyl group. Although no basic difference is seen in the polymer component of the obtained emulsion resin depending on the kind of the used dispersant, when emulsion polymerization is performed by using a polymer dispersant having a hydroxyl group, the presence of the hydroxyl group is presumed on at least the surfaces of the finemicroparticles, and thus the chemical and physical properties of the emulsion differ from those of emulsion resins obtained by polymerizing by using other dispersants.

The polymer dispersant containing hydroxyl groups is a dispersant of a polymer having a weight-average molecular weightof 10,000 or more, in which the side chains or terminals are substituted with hydroxyl groups, and examples include acrylic polymers such as sodium polyacrylate and polyacrylamide copolymerized with 2-ethylhexyl acrylate, polyethers such as polyethylene glycol and polypropylene glycol, and polyvinyl alcohols, and polyvinyl alcohols are especially preferable.

The polyvinyl alcohols used as a polymer dispersant include general polyvinyl alcohols obtained by hydrolyzing polyvinyl acetate, as well as modified polyvinyl alcohols such as cation-modified polyvinyl alcohols, anion-modified polyvinyl alcohols having anionic groups such as a carboxyl group, and silyl-modified polyvinyl alcohols having silyl groups. Although the polyvinyl alcohols have a higher effect of suppressing the generation of cracks in the formation of an ink absorbing layer at a higher average polymerization degree, when the average polymerization degree is within 5, 000, the viscosity of the emulsion resin is not high, and thus the emulsion resin is easily handled during the production. Therefore, the polyvinyl alcohol has an average polymerization degree of preferably from 300 to 5,000, more preferably from 1,500 to 5,000, and especially preferably from 3,000 to 4,500. The polyvinyl alcohol has a saponification degree of preferably from 70 to 100 mol%, more preferably from 80 to 99.5 mol%.

The resin that is emulsification-polymerized by the above-mentioned polymer dispersant include homopolymers or copolymers of ethylene-based monomers such as acrylic acid esters, methacrylic acid esters, vinyl-based compounds and styrene-based compounds, and diene-based compounds such as butadiene and isoprene, and examples include acrylic resins, styrene-butadiene-based resins and ethylene-vinyl acetate-based resins.

### <Other additives>

Various additives that can be applied to the high-refractive index layer and low-refractive index layer according to the present invention will be listed below. Examples include known various additives such as the ultraviolet absorbers described in Japanese Patent Application Laid-Open No. Sho 57-74193, Sho 57-87988 and Sho 62-261476, the antifading agents described in Japanese Patent Application Laid-Open No. Sho 57-74192, Sho 57-87989, Sho 60-72785, Sho 61-146591., Hei 1-95091 and Hei 3-13376, various anionic, cationic or nonionic surfactants, fluorescent bleaching agents described in Japanese Patent Application Laid-Open No. Sho 59-42993, Sho 59-52689, Sho 62-280069, Sho 61-242871 and Hei 4-219266, pH adjusting agents such as sulfuric acid, phosphoric acid, acetic acid, citric acid, sodium hydroxide, potassium hydroxide and potassium carbonate, defoaming agents, lubricants such as diethylene glycol, antiseptic agent, antimold agents, antistatic agents, matting agents, thermal stabilizers, antioxidants, flame retarders, crystal nucleating agents, inorganic particles, organic particles, viscosity depressants, smoothing agents, infrared ray absorbers, dyes and pigments.

### <Method for forming laminated body>

Although the method for forming the laminated body according to the present invention is not especially limited, a production method including steps of applying an application liquid for a high-refractive index layer containing a first water-soluble polymer and first metal oxide particles and an application liquid for a low-refractive index layer containing a second water-soluble polymer and second metal oxide particles on a substrate is preferable.

The application method is not especially limited, and examples include a roll coating process, a rod bar coating process, an air knife coating process, a spray coating process, a slide-type curtain application process, or the slide hopper application processes described in U. S. Patent No. 2,761,419 and 2, 761, 791, and the like, and an extrusion coat process, and the like. Furthermore, the format for performing multi-layer application of plural layers may be either sequential multi-layer application or simultaneous multi-layer application.

Hereinafter simultaneous multi-layer application by a slide hopper application process, which is a preferable production method (application method) in the present invention, will be explained in detail.

### <Solvent>

Although the solvent for preparing the application liquid for the high-refractive index layer and the application liquid for the low-refractive index layer is not especially limited, water, organic solvents, or mixed solvents thereof are preferable.

Examples of the above-mentioned organic solvent include alcohols such as methanol, ethanol, 2-propanol and 1-butanol, esters such as ethyl acetate, butyl acetate, propylene glycol monomethyl ether acetate and propylene glycol monomethyl ether acetate, ethers such as diethyl ether, propylene glycol monomethyl ether and ethylene glycol monoethyl ether, amides such as dimethylformamide and N-methylpyrrolidone, and ketones such as acetone, methyl ethyl ketone, acetylacetone and cyclohexanone. These organic solvents can be used singly or by mixing two or more types thereof.

From the viewpoints of environments, easiness of operation and the like, the solvent of the application liquid is especially preferably water, or a mixed solvent of water with methanol, ethanol or ethyl acetate.

### <Concentration of application liquid>

The concentration of the first water-soluble polymer in the application liquid for the high-refractive index layer is preferably from 1 to 10% by mass. Furthermore, the concentration of the first metal oxide particles in the application liquid for a high-refractive index layer is preferably 2 to 20% by mass.

The concentration of the second water-soluble polymer in the application liquid for a low-refractive index layer is preferably from 1 to 10% by mass. Furthermore, the concentration of the second metal oxide particles in the application liquid for a low-refractive index layer is preferably from 2 to 20% by mass.

### <Method for preparing application liquid>

The method for preparing the application liquid for a high-refractive index layer and the application liquid for a low-refractive index layer is not especially limited, and examples include a method including adding a water-soluble polymer, metal oxide particles, and other additives that are added as necessary, followed by stirring and mixing. At this time, the order of addition of the water-soluble polymer, and other additive that is added as necessary is also not especially limited, and the respective components may be sequentially added under stirring, or may be added at once and mixed under stirring. Where necessary, the viscosity is adjusted to a suitable viscosity by further using a solvent.

### <Viscosity of application liquid>

The viscosities of the application liquid for a high-refractive index layer and the application liquid for a low-refractive index layer at 40°C inperforming simultaneous multi-layer application by a slide hopper application process is preferably in the range from 5 to 100 mPa·s, more preferably in the range from 10 to 50 mPa·s. The viscosities of the application liquid for a high-refractive index layer and the application liquid for a low-refractive index layer at 40°C in performing simultaneous multi-layer application by a slide type curtain application process is preferably in the range from 5 to 1,200 mPa·s, more preferably in the range from 25 to 500 mPa·s.

Furthermore, the viscosities of the application liquid for a high-refractive index layer and the application liquid for a low-refractive index layer at 15°C is preferably 100 mPa·s or more, more preferably from 100 to 30,000 mPa·s, further preferably from 3, 000 to 30, 000 mPa·s, and especially preferably from 10,000 to 30,000 mPa·s.

### <Methods for application and drying>

The methods for application and drying are not especially limited, but it is preferable to warm the application liquid for a high-refractive index layer and the application liquid for a low-refractive index layer to 30°C or more, perform simultaneous multi-layer application of the application liquid for a high-refractive index layer and the application liquid for a low-refractive index layer on a substrate, once cooling the temperature of the formed coating to preferably 1 to 15°C (set), and then dry the coating at 10°C or more. A more preferable drying condition is conditions under a wet-bulb temperature of from 5 to 50°C and a film surface temperature of from 10 to 50°C. Furthermore, it is preferable that the cooling system immediately after the application is performed by a horizontal set format system from the viewpoint of the improvement of the uniformity of the formed coating.

The application thicknesses of the application liquid for a high-refractive index layer and the application liquid for a low-refractive index layer may be applied so as to be preferable thicknesses during drying as shown above.

The above-mentioned set refers to a step of increasing the viscosity of the coating composition by a means of decreasing the temperature by blowing the coating with cold air or the like to thereby increase the viscosity of the coating composition and decrease the fluidities between the layers and the substances in each layer, or reacting the first compound and second compound to form a gel, i.e., to form an intermediate layer. The state in which no substance adheres to a finger when the applied film is blown with cold air from the surface and the surface of the applied film is pressurized by the finger is defined as a state in which the set is completed.

After the application, the time from the blowing with cold air to the timepoint when the set is completed (set time) is preferably within 5 minutes, more preferably within 2 minutes. Furthermore, the time of the lower limit is not especially limited, but it is preferable to take a time of 45 seconds or more. When the set time is too short, the mixing of the components in the layer may be insufficient. On the other hand, when the set time is too long, the interlayer diffusion of the metal oxide particles proceeds, and thus the difference in refractive indices of the high-refractive index layer and low-refractive index layer may become insufficient. If the high-elasticization of the intermediate layer between the high-refractive index layer and low-refractive index layer quickly arises, then it is not necessary to provide the step of setting.

The set time can be adjusted by adjusting the concentration of the water-soluble polymer, adjusting the concentration of the metal oxide particles, or adding other components such as various well-known gelling agents such as gelatin, pectin, agar, carrageenan and gellan gum.

The temperature of the cold air is preferably from 0 to 25°C, more preferably from 5 to 10°C. Furthermore, the time in which the coating is exposed to cold air depends on the transportation velocity of the coating and is preferably from 10 to 120 seconds.

### [Layer adjacent to substrate]

The layer adjacent to the substrate in the optical film of the present invention contains at least one selected from the group consisting of a modified polyvinyl alcohol and an aqueous polyester resin modified with a vinyl monomer. By having such layer adjacent to the substrate, the change in color of the optical film over time can be suppressed.

Specific examples of the above-mentioned modified polyvinyl alcohol include polymers each having a monomer unit, as a copolymerization component of a vinyl acetate-based polymers before saponification, vinyl compounds such as ethylene and propylene, acrylic acid esters (for example, t-butyl acrylate, phenyl acrylate, 2-naphthyl acrylate, and the like), methacrylic acid esters (for example, methyl methacrylate, ethyl methacrylate, 2-hydroxyethyl methacrylate, benzyl methacrylate, 2-hydroxypropyl methacrylate, phenyl methacrylate, cyclohexyl methacrylate, cresyl methacrylate, 4-chlorobenzyl methacrylate, ethylene glycol dimethacrylate, and the like), acrylamides (for example, acrylamide, methylacrylamide, ethylacrylamide, propylacrylamide, butylacrylamide, tert-butylacrylamide, cyclohexylacrylamide, benzylacrylamide, hydroxymethylacrylamide, methoxyethylacrylamide, dimethylaminoethylacrylamide, phenylacrylamide, dimethylacrylamide, diethylacrylamide, β-cyanoethylacrylamide, diacetoneacrylamide, and the like), metacrylamides (for example, metacrylamide, methylmetacrylamide, ethylmetacrylamide, propylmetacrylamide, butylmetacrylamide, tert-butylmetacrylamide, cyclohexylmetacrylamide, benzylmetacrylamide, hydroxymethylmetacrylamide, methoxyethylmetacrylamide, dimethylaminoethylmetacrylamide, phenylmetacrylamide, dimethylmetacrylamide, diethylmetacrylamide, β-cyanoethylmetacrylamide, and the like), styrenes (for example, styrene, methylstyrene, dimethylstyrene, trimethylstyrene, ethylstyrene, isopropylstyrene, methoxystyrene, acetoxystyrene, chlorostyrene, dichlorostyrene, bromostyrene, methyl vinylbenzoate ester, and the like), alkyl monovinyl ethers (for example, n-butyl vinyl ether, isobutyl vinyl ether, ethylhexyl vinyl ether, cyclohexyl vinyl ether, and the like), divinylbenzene, acrylonitrile, methacrylonitrile, N-vinylpyrrolidone, N-vinyloxazolidone, vinylidene chloride and phenyl vinyl ketone: and polyvinyl alcohols that are partially butyralized and dissolved in water. These modified polyvinyl alcohols may be used singly or by mixing two or more types thereof. Furthermore, as these modified polyvinyl alcohols, commercially available products may be used, or synthetic products may be used. Among these, ethylene-vinyl alcohol copolymers andalkylmonovinyl ether-vinyl alcohol copolymers are preferable, and the ethylene-vinyl alcohol copolymers are more preferable.

Furthermore, the aqueous polyester resin modified with a vinyl monomer used in the present invention is obtained by performing dispersion polymerization of a vinyl monomer in an aqueous solution of a hydrophilic polyester resin. The aqueous polyester resin modified with a vinyl monomer can be obtained by, for example, dissolving a hydrophilic polyester resin in hot water, dispersing a vinyl monomer in the obtained aqueous solution of the hydrophilic polyester resin, and performing emulsification polymerization or suspension polymerization. The polymerization process is preferably emulsification polymerization. The aqueous polyester resins modified with the vinyl monomer can be used singly or in combination of two or more types thereof.

The aqueous polyester resin before modification is a substantially linear polyester that can be obtained by a polycondensation reaction of a dicarboxylic acid (hereinafter the dicarboxylic acid is also referred to as a polybasic acid) or an ester thereof with a polyol or an ester thereof, and means a polyester resin in which a component having a hydrophilic group such as a component having a sulfonate salt, a diethylene glycol component, a polyalkylene ether glycol component, a polyether dicarboxylic acid component or the like is introduced as a copolymerization component. As the component having a hydrophilic group, a dicarboxylic acid having a sulfonate salt is preferably used.

As the polybasic acid component for the aqueous polyester resin, for example, telephthalic acid, isophthalic acid, phthalic acid, phthalic anhydride, 2,6-naphthalenedicarboxylic acid, 1,4-cyclohexanedicarboxylic acid, adipic acid, sebacic acid, trimellitic acid, pyromellitic acid, dimer acids, maleic acid, fumaric acid, itaconic acid, p-hydroxybenzoic acid and p-(β-hydroxyethoxy)benzoic acid can be used. Furthermore, as the above-mentioned polybasic acid having a sulfonate salt, those having a group of a sulfonate alkali metal salt are preferable, and examples can include alkali metal salts such as 4-sulfoisophthalic acid, 5-sulfoisophthalic acid, sulfotelephthalic acid, 4-sulfophthalic acid, 4-sulfonaphthalene-2,7-dicarboxylic acid and 5-(4-sulfophenoxy)isophthalic acid, of which 5-sulfoisophthate sodium salt is more preferable.

These dicarboxylic acids having a sulfonate salt are preferably used within the range from 5 to 15 mol%, more preferably within the range from 6 to 10 mol%, with respect to the whole dicarboxylic acid components from the viewpoint of water-solubility and water resistance. As the aqueous polyester resin, an aqueous polyester resin having telephthalic acid and isophthalic acid as main dicarboxylic acid components is preferable, and the ratio of the used telephthalic acid and isophthalic acid is preferably from 30/70 to 70/30 by a molar ratio from the viewpoint of applicability and solubility in water. Furthermore, it is preferable that the telephthalic acid component and isophthalic acid component are contained by 50 to 80 mol% with respect to the whole dicarboxylic acid components, and it is more preferable to use an alicyclic dicarboxylic acid as a copolymerization component. Examples of these alicyclic dicarboxylic acids can include 1,4-cyclohexanedicarboxylic acid, 1,3-cyclohexanedicarboxylic acid, 1,2-cyclohexanedicarboxylic acid, 1,3-cyclopentane dicarboxylic acid, 4,4'-bicyclohexyldicarboxylic acid, and the like.

Furthermore, in the aqueous polyester resin using telephthalic acid and isophthalic acid as main dicarboxylic acid components, dicarboxylic acids other than those mentioned above can be used as copolymerization components. Examples of these dicarboxylic acids include aromatic dicarboxylic acids and linear aliphatic dicarboxylic acids. It is preferable that the aromatic dicarboxylic acids are used within the range from 30 mol% or less of the whole dicarboxylic acid components. Examples of these aromatic dicarboxylic acid components include phthalic acid, 2,5-dimethyltelephthalic acid, 2,6-naphthalenedicarboxylic acid, 1,4-naphthalenedicarboxylic acid and biphenyldicarboxylic acid. Furthermore, it is preferable that the linear aliphatic dicarboxylic acids are used within the range from 15 mol% or less of the whole dicarboxylic acid components. Examples of these linear aliphatic dicarboxylic acid components include adipic acid, pimelic acid, suberic acid, azelaic acid and sebacic acid.

Furthermore, specific examples of the polyol component can include ethylene glycol, diethylene glycol, 1,4-butanediol, neopentyl glycol, dipropylene glycol, 1,6-hexanediol, 1,4-cyclohexanedimethanol, xylylene glycol, trimethylolpropane, poly(ethylene oxide) glycol, poly(tetramethyleneoxide) glycol, and the like.

It is preferable to use an aqueous polyester resin having ethylene glycol by 50 mol% or more of the whole polyol components as the polyol component of the aqueous polyester resin.

The aqueous polyester resin can be synthesized by using a dicarboxylic acid or an ester thereof and a polyol or an ester thereof as starting rawmaterials. Various methods can be used for the synthesis, and for example, the aqueous polyester resin can be obtained by a well-known method for producing a polyester resin in which an initial condensate of a dicarboxylic acid and a polyol is formed by a transesterification method or a directesterification method, and this is then melt-polymerized. Furthermore, to be especially mentioned, examples include a method in which a transesterification is performed between an ester of a dicarboxylic acid such as a dimethyl ester of a dicarboxylic acid and a polyol, methanol is distilled, the pressure is gradually reduced, and polycondensation is performed under a high vacuum; a method in which an esterification reaction between a dicarboxylic acid and a polyol is performed, the generated water is distilled, the pressure is gradually reduced, and polycondensation is performed under a high vacuum; and a method in which a transesterification reaction is performed between an ester of a dicarboxylic acid and a polyol, a dicarboxylic acid is further added, an esterification reaction is performed, and polycondensation is then performed under a high vacuum. As a transesterification catalyst and a polycondensation catalyst, known catalysts can be used, and as the transesterification catalyst, manganese acetate, calcium acetate, zinc acetate and the like can be used, and as the polycondensation catalyst, antimony trioxide, germanium oxide, dibutyltin oxide, titanium tetrabutoxide and the like can be used, respectively. However, various conditions such as a polymerization method and a catalyst are not limited to those mentioned above.

Examples of the vinyl polymer used for the modification of the aqueous polyester resin include alkyl (meth) acrylates (examples of the alkyl group include a methyl group, an ethyl group, an n-propyl group, an isopropyl group, an n-butyl group, an isobutyl group, a t-butyl group, a 2-ethylhexyl group, a cyclohexyl group, a phenyl group, a benzyl group, a phenylethyl group, and the like); hydroxy group-containing monomers such as 2-hydroxyethyl acrylate, 2-hydroxyethyl methacrylate, 2-hydroxypropyl acrylate and 2-hydroxypropyl methacrylate; amide group-containing monomers such as acrylamide, metacrylamide, N-methylmetacrylamide, N-methylacrylamide, N-methylolacrylamide, N-methylolmetacrylamide, N,N-dimethylolacrylamide, N-methoxymethylacrylamide, N-methoxymethylmetacrylamide and N-phenylacrylamide; amino group-containing monomers such as N,N-diethylaminoethyl acrylate and N,N-diethylaminoethyl methacrylate; epoxy group-containing monomers such as glycidyl acrylate and glycidyl methacrylate; and acrylic monomers containing a carboxyl group or a salt thereof such as acrylic acid, methacrylic acid and salts thereof (sodium salts, potassium salts, ammonium salts, and the like). Furthermore, examples of monomers other than the acrylic monomers include epoxy group-containing monomers such as allyl glycidyl ether; monomers containing a sulfonate group or a salt thereof such as styrene sulfonate, vinyl sulfonate and salts thereof (sodium salts, potassium salts, ammonium salts, and the like) ; monomers containing a carboxyl group or a salt thereof such as crotonic acid, itaconic acid, maleic acid, fumaric acid and salts thereof (sodium salt, potassium salt, ammonium salt, and the like); monomers containing an acid anhydride group such as maleic anhydride and itaconic anhydride; monomers containing an isocyanate group such as vinyl isocyanate and allyl isocyanate; styrene; vinyltrisalkoxysilanes; alkylmaleic acid monoesters; alkylfumaric acid monoesters; acrylonitrile; methcrylonitrile; alkyl itaconic acid monoesters; vinylidene chloride; vinyl acetate; vinyl chloride, and the like. Among these, epoxy group-containing monomers such as glycidyl acrylate and glycidyl methacrylate are preferable in view of coating strength. The vinyl monomers can be used singly or in combination of two or more types thereof.

Examples of the polymerization initiator used for performing the modification of the aqueous polyester resin with the vinyl monomer include ammonium persulfate, potassium persulfate, sodium persulfate, benzoyl peroxide, and the like. Among these, ammonium persulfate is preferable. The modification can be performed without using a surfactant, but it is also possible to use a surfactant as an emulsifier for the purpose of improving polymerization stability. In this case, either a general nonionic or anionic surfactant can be used.

The ratio of the above-mentioned vinyl monomer to the above-mentioned aqueous polyester resin is preferably within the range from 50 : 50 to 3 : 97, more preferably within the range from 30 : 70 to 5 : 95, and further preferably within the range from 20 : 80 to 10 : 90 in terms of mass ratio. Within this range, small change in color is shown over time, and the tight adhesion to the substrate becomes fine.

It is preferable that the layer adjacent to the substrate contains a hardener. By containing the hardener, the film strength is improved, and the tight adhesion to the substrate becomes fine.

The hardener used in the present invention is not especially limited, and examples of typical kinds include vinyl-based hardeners, vinylsulfone-based hardeners, epoxy-based hardeners, peptide-based hardeners, melamine-based hardeners, formalin-based hardeners, aldehyde-based hardeners and acrylamide-based hardeners. Among these, the acrylamide-based hardeners or epoxy-based hardeners are preferable.

Further specific examples of the hardener include acrylamide-based hardeners such as the compound represented by H-1 in the following chemical formula (1).

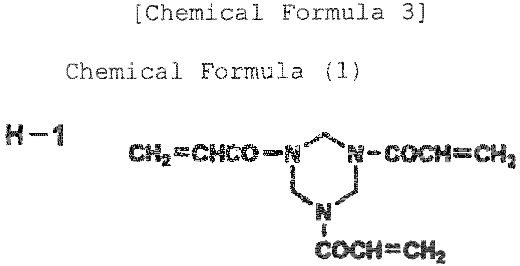

Furthermore, the epoxy-based hardeners are hardeners having epoxy groups in the molecule, and typical examples include the compounds represented by E-1 to E-18 in the following chemical formulas (2) and (3).

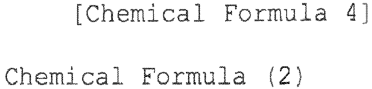

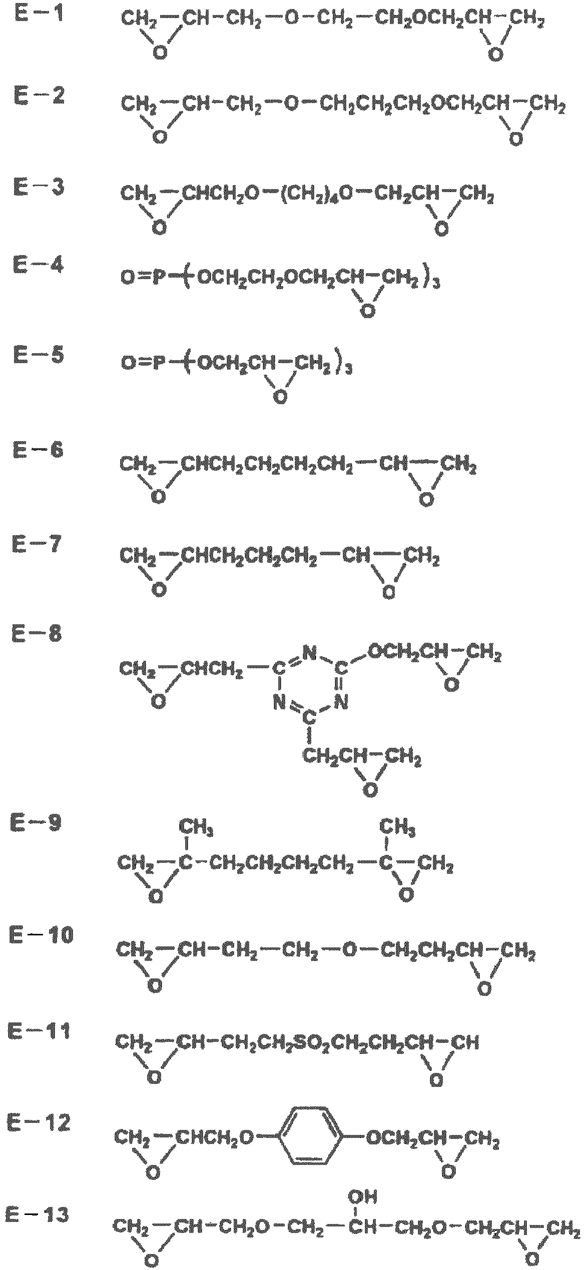

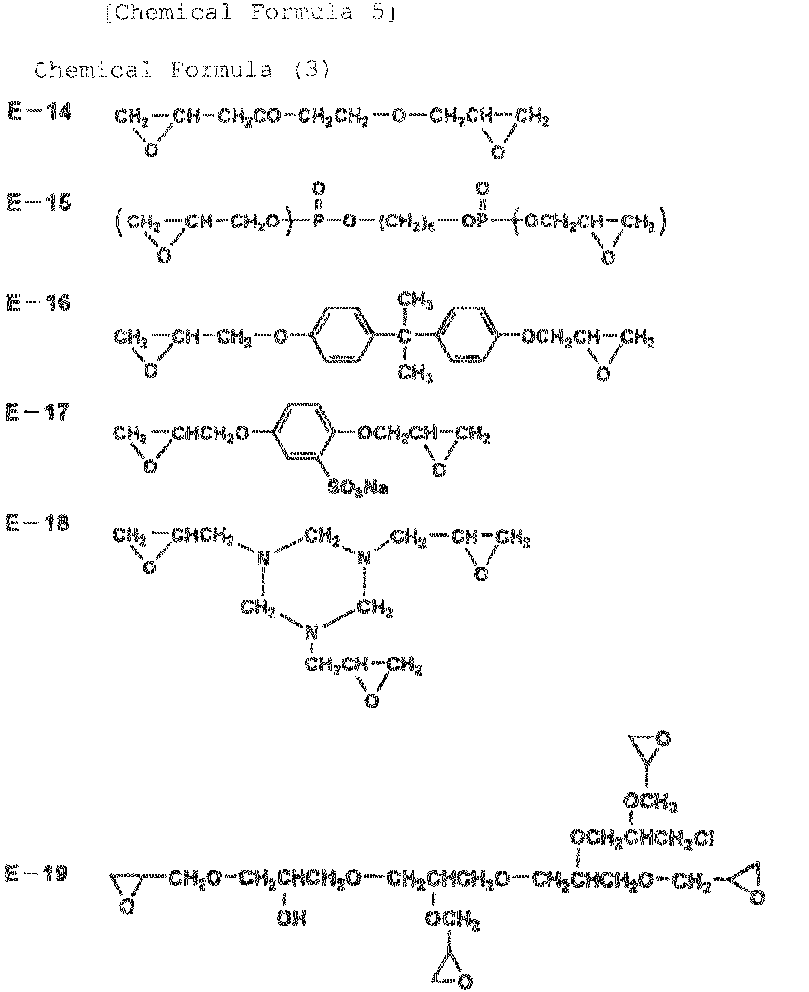

The content of the above-mentioned hardener is preferably from 1 to 50% by mass, more preferably from 3 to 20% by mass, with respect to the polymer component included in the layer adjacent to the substrate. The film strength can be fine within this range.

The layer adjacent to the substrate may be a layer other than the above-mentioned laminated body containing the high-refractive index layer and low-refractive index layer, or may be a part of the above-mentioned laminated body, i.e., the lowermost layer of the above-mentioned laminated body. Furthermore, it may be possible that the lowermost layer of the above-mentioned laminated body is the layer adjacent to the substrate in the present invention, and another layer adjacent to the substrate in the present invention is disposed besides the above-mentioned laminated body. In the case when the layer adjacent to the substrate is the lowermost layer of the laminated body, the layer adjacent to the substrate has metal oxide particles and the like as explained in the item of laminated body mentioned above.

From the viewpoint of the tight adhesion with the substrate, it is preferable that the above-mentioned layer adjacent to the substrate is a layer other than the above-mentioned laminated body, and in such case, it is preferable that the layer adjacent to the substrate contains a modified polyvinyl alcohol. The application amount of the modified polyvinyl alcohol in the case when the layer adjacent to the substrate is a layer other than the above-mentioned laminated body is preferably from 0.01 to 1 g/m², more preferably from 0.02 to 0.8 g/m² even more preferably from 0.05 to 0.5 g/m². In this range, the change in color over time is small, and the durability is excellent.

In the case when the layer adjacent to the substrate is a layer other than the above-mentioned laminated body, the thickness of the layer adjacent to the substrate is preferably from 0.01 to 2 µm, more preferably from 0.05 to 1 µm. In the case when the layer adjacent to the substrate is a part of the above-mentioned laminated body, the thickness of the layer adjacent to the substrate is preferably from 0.02 to 1 µm, more preferably from 0.05 to 0.35 µm.

The method for forming the layer adjacent to the substrate is not especially limited. For example, a method in which an application liquid containing at least one selected from the group consisting of a modified polyvinyl alcohol and an aqueous polyester resin modified with a vinyl monomer by using an apparatus such as a natural coater, a knife belt coater, a floating knife, a roll coat, an air knife coat, a knife overroll, a knife-on-branket, a spray, a dip, a kiss roll, a squeeze roll, a reverse roll, an air blade, a curtain flow coater, a doctor blade, a wire bar, a die coater, a comma coater, a spin coater, a baker applicater, a gravure coater or a micro gravure coater.

Furthermore, in the case when the layer adjacent to the substrate is the lowermost layer of the above-mentioned laminated body, the simultaneous multi-layer application as explained in the item of laminated body mentioned above can also be used.

### [Optical film]

The whole thickness of the optical film of the present invention is preferably from 12 µm to 315 µm, more preferably from 15 µm to 200 µm, further preferably from 20 µm to 100 µm. Therefore, the optical film of the present invention can obtain a high infrared reflectance at a thinner film thickness as compared to those of existing infrared reflective films.

The optical film of the present invention may further have one or more functional layer such as electroconductive layers, antistatic layers, gas barrier layers, easy adhesive layers (adhesive layers), adhesive layers, antifouling layers, deodorant layers, dripping layers, smoothing layers, hard coat layers, antiwearing layers, antireflective layers, electromagnetic shielding layers, ultraviolet absorbing layers, infrared absorbing layers, printing layers, fluorescent layers, hologram layers, peeling layers, adhesive layers, adhesive layers, infrared cutoff layers other than the high-refractive index layer and low-refractive index layer in the present invention (metal layers, liquid crystal layers), colored layers (visible ray absorbing layers), and intermediate film layers used in laminated glass, under the substrate or the uppermost layer opposite to the substrate, aiming at adding additional functions. The adhesive layers, infrared absorbing layers and hard coat layers, which are preferable functional layers, will be explained below.

### <Adhesive layer>

An adhesive that constitutes an adhesive layer is not especially limited, and for example, acrylic adhesives, silicon-based adhesives, urethane-based adhesives, polyvinyl butyral-based adhesives, ethylene-vinyl acetate-based adhesives, and the like can be exemplified.

In the case when the optical film of the present invention is laminated on a window glass, a means of attaching in which water is sprayed onto a window and the adhesive layer of this optical film is conformed to the surface of the glass in a wet state, so-called a water pasting process is preferably used from the viewpoints of adjustment of attachment, adjustment of position, and the like. Therefore, acrylic adhesives, which have a weak adhesion effect under moistness in which water is present, are preferably used.

The acrylic adhesive to be used may be either of solvent-based and emulsion-based adhesives, andispreferably a solvent-based adhesive since the adhesion effect and the like are easily increased, and a solvent-based adhesive obtained by solution polymerization is especially preferable. Examples of the raw materials in the case when such solvent-based acrylic adhesive is produced by solution polymerization include, main monomers that form the backbone such as ethyl acrylate, butyl acrylate, 2-ethylhexyl acrylate and ocryl acrylate; comonomers for improving flocculation force such as vinyl acetate, acrylonitrile, styrene and methyl methacrylate; and functional group-containing monomers for further promoting crosslinking, imparting a stable adhesion effect, and retaining a certain degree of adhesion effect even in the presence of water, such as methacrylic acid, acrylic acid, itaconic acid, hydroxyethyl methacrylate and glycidyl methacrylate. As the adhesive layer for the stack film, those having a main polymer having a low glass transition temperature (Tg) such as butyl acrylate is especially useful since high tackiness is especially required.

As additives, stabilizers, surfactants, ultraviolet absorbers, flame retarders, antistatic agents, antioxidants, thermal stabilizers, smoothing agents, fillers, coloring, adhesion adjusting agents, and the like can also be incorporated in this adhesive layer. Especially, in the case of use for attaching to windows as in the present invention, it is effective to add an ultraviolet absorber so as to suppress the deterioration of the optical film by ultraviolet ray.

The thickness of the adhesive layer is preferably from 1 µm to 100 µm, more preferably from 3 µm to 50 µm. When the thickness is 1 µm or more, the adhesiveness tends to be improved, and thus a sufficient adhesion effect can be obtained. Conversely, when the thickness is 100 µm or less, the transparency of the optical film is improved, as well as when the optical film is attached to a window glass and then peeled off, flocculation breakage does not arise between the adhesive layers, and thus the residue of the adhesive on the glass surface tends to be decreased.

The method for forming the adhesive layer is not especially limited, and examples include a method in which an adhesive application liquid containing the above-mentioned adhesive is prepared, applied onto a separator film by using a wire bar or the like, and dried to thereby produce a film with an adhesive layer. Thereafter the surface of the adhesive layer of the film with an adhesive layer is laminated on the surface of the above-mentioned laminated body by a pasting machine, and the like.

### <Infrared absorbing layer>

The optical film of the present invention can have an infrared absorbing layer at an optional position. The material to be included in the infrared absorbing layer is not especially limited, and examples include ultraviolet curable resins, photopolymerization initiators, infrared absorbers, and the like.

The ultraviolet curable resins are advantageous since they are superior to other resins in hardness and smoothness, and also from the viewpoints of the dispersibility of ITO, ATO and thermal conductive metal oxides. As the ultraviolet curable resins, any ultraviolet curable resins can be used without specific limitation as long as they form a transparent layer by curing, and examples include silicone resins, epoxy resins, vinyl ester resins, acrylic resins, allyl ester resins and the like. The acrylic resins are more preferable from the viewpoints of hardness, smoothness and transparency.

It is preferable that the above-mentioned acrylic resins contain reactive silica particles including photosensitive groups having photopolymerization reactivity introduced on the surfaces thereof (hereinafter also simply referred to as "reactive silica particles") as those described in International Publication No. 2008/035669, from the viewpoints of hardness, smoothness and transparency. As the photosensitive groups having photopolymerizability, polymerizable unsaturated groups represented by (meth)acryloyloxy groups and the like can be exemplified. Furthermore, the ultraviolet curable resins may be those containing a compound that can arise a photopolymerization reaction with the photosensitive groups having photopolymerization reactivity introduced on the surfaces of the reactive silica particles such as those containing an organic compound having a polymerizable unsaturated group. Furthermore, silica particles such that a hydrolyzable silane modified with a polymerizable unsaturated group is chemically bound to silica particles by forming silyloxy groups between the silyl group and the silica particles by the hydrolysis reaction of the hydrolyzable silyl groups can be used as reactive silica particles. The average particle diameter of the reactive silica particles is preferably from 0.001 to 0.1 µm. By setting the average particle diameter to be within such range, the transparency, smoothness and hardness can be satisfied in a balanced manner.

Furthermcre, the above-mentioned acrylic resins may contain constitutional units derived from fluorine-containing vinyl monomers from the viewpoint of adjustment of the refractive index. The fluorine-containing vinyl monomers include fluoroolefins (for example, fluoroethylene, vinylidene fluoride, tetrafluoroethylene, hexafluoropropylene and the like), partially or fully fluorinated alkyl ester derivatives of (meth)acrylic acids (for example, Biscoat 6FM (trade name, manufactured by Osaka Organic Chemical Industry Ltd.) and R-2020 (trade name, manufactured by Daikin industries, Ltd.)), fully or partially fluorinated vinyl ethers, and the like.

As the photopolymerization initiator, well-known photopolymerization initiators can be used, and these can be singly or in combination of two or more types thereof.

As the inorganic infrared absorber that may be contained in the infrared absorbing layer, tin-doped indium oxide (ITO), antimony-doped tin oxide (ATO), zinc antimonate, lanthanum hexaborate (LaB₆), cesium-containing tungsten oxide (Cs_{0.33}WO₃) and the like are preferable from the viewpoints of visible ray transmittance, infrared ray absorbability, dispersion adequacy in resins and the like. These can be singly or in combination of two or more types thereof. The average particle diameter of the inorganic infrared absorber is preferably from 5 to 100 nm, more preferably from 10 to 50 nm. When the average particle diameter is lower than 5 nm, the dispersibility in resins and infrared ray absorbability may decrease. On the other hand, when the average particle diameter is more than 100 nm, the visible ray transmittance may decrease. The average particle diameter is measured by imaging the particles by a transmitting electron microscope, randomly extracting, for example, 50 particles, measuring the particle diameters and averaging the particle diameters. Furthermore, in the case when the particle shape is not spherical, the average particle diameter is defined that the longer diameters are measured and the average particle diameter is calculated therefrom.

The content of the above-mentioned inorganic infrared absorber in the infrared absorbing layer is preferably from 1 to 80% by mass, more preferably from 5 to 50% by mass with respect to the total mass of the infrared absorbing layer. When the content is 1% by mass or more, a sufficient infrared absorbing effect appears, whereas when the content is 80% by mass or less, a sufficient amount of visible ray can be passed.

The infrared absorbing layer may contain metal oxides other than those mentioned above, and other infrared absorbers such as organic-based infrared absorbers and metal complexes, to the extent that the effect of the present invention is exerted. Specific examples of such other infrared absorbers include diimonium-based compounds, aluminum-based compounds, phthalocyanine-based compounds, organic metal complexes, cyanine-based compounds, azo compounds, polymethine-based compounds, quinone-based compounds, diphenylmethane-based compounds, triphenylmethane-based compounds, and the like.

The thickness of the infrared absorbing layer is preferably from 0.1 µm to 50 µm, more preferably from 1 µm to 20 µm. When the thickness is 0.1 µm or more, the infrared ray absorbability tends to be improved, whereas when the thickness is 50 µm or less, the crack resistance of the coating is improved.

The method for forming the infrared absorbing layer is not especially limited, and examples include a method in which an application liquid for the infrared absorbing layer containing the above-mentioned respective components is prepared, and the application liquid is applied by using a wire bar or the like and then dried.

### <Hard coat layer>

It is preferable that a hard coat layer containing a resin that cures by heat, ultraviolet ray or the like is laminated as a surface protective layer for increasing rubfastness onto the optical film of the present invention on the uppermost layer that is on the opposite side of the side having the adhesive layer of the substrate.

The curable resins for use in the hard coat layer include heat curable resins and ultraviolet ray curable resins, and the ultraviolet ray curable resins are preferable since they are easily molded, and among these, ultraviolet ray curable resins having a pencil hardness of at least 2H are more preferable. Such curable resins can be used singly or in combination of two or more types thereof.

Examples of such ultraviolet ray curable resins include multifunctional acrylate resins such as acrylic acid or methacrylic acid esters each having a polyhydric alcohol, and multifunctional urethane acrylate resins as those synthesized from a diisocyanate and an acrylic acid or methacrylic acid having a polyhydric alcohol. Furthermore, polyether resins, polyester resins, epoxy resins, alkid resins, spiroacetal resin, polybutadiene resins or polythiolpolyene resins each having an acrylate-based functional group can also be preferably used.

Furthermore, as reactive diluents for these resins, di- or more-functional monomers or oligomers having a relatively low viscosity such as 1,6-hexanediol di(meth)acrylate, tripropylene glycol di(meth)acrylate, diethylene glycol di(meth)acrylate, hexanediol(meth)acrylate, pentaerythritol tri(meth)acrylate, trimethylolpropane tri(meth)acrylate, dipentaerythritol hexa(meth)acrylate and neopentyl glycol di(meth)acrylate, and acrylic acid esters such as N-vinylpyrrolidone, ethyl acrylate and propyl acrylate, methacrylic acid esters such as ethyl methacrylate, propyl methacrylate, isopropyl methacrylate, butyl methacrylate, hexyl methacrylate, isooctyl methacrylate, 2-hydroxyethyl methacrylate, cyclohexyl methacrylate and nonylphenyl methacrylate, tetrahydrofurfuryl methacrylate, and derivatives such as caprolactone-modified products thereof, and monofunctional monomers such as styrene, α-methylstyrene or acrylic acid can be used. These reactive diluents can be used singly or in combination of two or more types thereof.

Furthermore, as photosensitizers (radical polymerization initiators) for these resins, benzoin and alkyl ethers thereof such as benzoin, benzoin methyl ether, benzoin ethyl ether, benzoin isopropyl ether and benzyl methyl ketal; acetophenones such as acetophenone, 2,2-dimethoxy-2-phenylacetophenone and 1-hydroxycyclohexylphenylketone; anthraquinones such as methylanthraquinone, 2-ethylanthraquinone and 2-amylanthraquinone; thioxanthones such as thioxanthone, 2,4-diethylthioxanthone and 2,4-diisopropylthioxanthone; ketals such as acetophenone dimethyl ketal and benzyl dimethyl ketal; and benzophenones such as benzophenone and 4,4-bismethylaminobenzophenone can be used. These can be singly or in combination of two or more types thereof. In addition, these can be used in combination with photoinitiator aids such as tertiary amines such as triethanol amine and methyldiethanol amine; and benzoate derivatives such as 2-dimethylaminoethyl benzoate and ethyl 4-dimethylaminobenzoate. The use amount of these radical polymerization initiators is from 0.5 to 20 parts by mass, preferably from 1 to 15 parts by mass with respect to 100 parts by mass of the polymerizable component of the resin.

Where necessary, a well-known general coating additive may be incorporated in the above-mentioned curable resin as necessary. For example, silicone-based and fluorine-based coating additives that impart leveling, surface slipping property and the like have an effect on a property to prevent scratching on the surface of a cured film, and can lower the inhibition of the curing of the resin by oxygen by the bleeding of the coating additives on the air interface in the case when ultraviolet ray is used as active energy ray, and thus an effective degree of curing can be obtained even under a condition of a low irradiation intensity.

Furthermore, it is preferable that the hard coat layer contains inorganic microparticles. Preferable inorganic microparticles include microparticles of an inorganic compound containing a metal such as titanium, silica, zirconium, aluminum, magnesium, antimony, zinc or tin. The average particle diameter of the inorganic microparticles is preferably 1000 nm or less, more preferably in the range from 10 to 500 nm, for ensuring the permeability of visible ray. Furthermore, as the inorganic microparticles, inorganic microparticles having photosensitive groups having photopolymerization reactivity such as monofunctional or multifunctional acrylates introduced on the surfaces thereof are preferable since the dropping off from the hard coat layer can be suppressed more under a higher bonding force with the curable resin that forms the hard coat layer.

The thickness of the hard coat layer is preferably from 0.1 µm to 50 µm, more preferably from 1 µm to 20 µm. When the thickness is 0.1 µm or more, the hard coat property tends to be improved, and conversely, when the thickness is 50 µm or less, the transparency of the optical film tends to be improved.

Also, the hard coat layer may double as the above-mentioned infrared absorbing layer.

The method for forming the hard coat layer is not especially limited, and examples include a method in which an application liquid for the hard coat layer containing the above-mentioned respective components is prepared, the application liquid is applied by a wire bar or the like, and the application liquid is cured by heat and/or UV to thereby form the hard coat layer.

### [Infrared shielding body]

The optical film of the present invention can be applied to a wide variety of fields. For example, it is used as a film for covering a window such as a heat ray reflecting film that imparts a heat ray reflecting effect to equipments that are exposed to sunlight for a long period such as windows outside of buildings and automotive windows by being laminated with the equipments, or a film for an agricultural vinyl greenhouse, or the like, for the purpose of increasing mainly the weather resistance. Furthermore, the optical film is preferably used also as an automotive optical film for interposing between glasses of an automotive laminated glass or the like. This case is preferable from the viewpoint of durability since the optical film can be sealed off from an ambient air gas.

Especially, the optical film according to the present invention is preferably used in an element that is laminated with a base structure such as a glass or a resin as a substitute for a glass, either directly or through an adhesive.

Namely, the present invention provides an infrared shielding body including a base structure and the optical film of the present invention disposed at least one surface of the base structure.

Specific examples of the above-mentioned base structure include glasses, polycarbonate resins,polysulfone resins, acrylic resins, polyolefin resins, polyether resins, polyester resins, polyamide resins, polysulfide resins, unsaturated polyester resins, epoxy resins, melamine resins, phenol resins, diallylphthalate resins, polyimide resins, urethane resins, polyvinyl acetate resins, polyvinyl alcohol resins, styrene resins, vinyl chloride resins, metal plates, ceramics and the like. The kind of the resin may be either a thermoplastic resin, a thermosetting resin or an ionizing radiation curable resin, and these may be used singly or in combination of two or more types thereof. The base structure that can be used in the present invention can be produced by a well-known method such as extrusion molding, calender molding, injection molding, hollow molding or compression molding.

The thickness of the base structure is not especially limited, and is generally from 0.1 mm to 5 cm.

It is preferable that the adhesive layer for laminating the optical film of the present invention with the base structure is disposed such that the optical film is positioned on the side of a sunlight (heat ray) incident plane. Furthermore, it is preferable to sandwich the optical film of the present invention between a window glass and a base structure since the optical film can be sealed off from surrounding gas such as moisture and thus is excellent in durability. It is also preferable to dispose the optical film of the present invention out of doors or outside of a car (for exterior use) since the optical film has environmental durability.

Furthermore, a polyvinyl butyral-based resin used as an intermediate layer for a laminated glass, or an ethylene-vinyl acetate copolymer-based resin may also be used as the above-mentioned adhesion layer or adhesive layer. Specific examples thereof include plastic polyvinyl butyrals (manufactured by Sekisui Chemical Co., Ltd., manufactured by Mitsubishi Monsanto Chemical Company, and the like), ethylene-vinyl acetate copolymers (manufactured by Du Pont, Duramin manufactured by Takeda Pharmaceutical Company, Ltd.) and modified ethylene-vinyl acetate copolymers (Melthene (registered trademark) G manufactured by Tosoh Corporation). In addition, an ultraviolet absorber, an antioxidant, an antistatic agent, a thermal stabilizer, a smoothing agent, a filler, coloring, an adhesion (tackiness) modifier and the like may be suitably added and incorporated into the adhesion layer or adhesive layer.

A preferable base structure is a plastic base structure, a metal base structure, a ceramic base structure, a fabric base structure or the like, and the optical film of the present invention can be disposed on base structures having various shapes such as a film-like shape, a plate-like shape, a spherical shape, a cubic shape and a cuboid shape. Among these, a plate-like ceramic base structure is preferable, and an infrared shielding body including a glass plate and the optical film of the present invention disposed thereon is more preferable. Examples of the glass plate include the float sheet glass described in JIS R3202: 1996 and a polished sheet glass, and the glass thickness is preferably from 0.01 mm to 20 mm.

As the method for disposing the optical film of the present invention on the base structure, a method in which an adhesive layer is disposed by application onto the optical film and the optical film is laminated on the base structure through the adhesive layer as mentioned above is preferably used.

As the method for laminating, dry pasting in which the film is directly attached to the base structure, and a method in which lamination is performed by pasting of water pasting process as mentioned above can be applied, and it is more preferable to laminate by pasting of water pasting process from the viewpoints of easiness of working, such as prevention of incorporation of air between the base structure and optical film, and the positioning of the optical film on the base structure.

Alternatively, the infrared shielding body of the present invention may have a form in which the optical films of the present invention are disposed on the both surfaces of a glass, or may have a form in which adhesive layers are disposed by application on the both surfaces of the optical film of the present invention and glasses are laminated on the both surfaces of the optical film.

### EXAMPLES

The present invention will be explained below in detail with referring to Examples, but the present invention is not limited at all by these Examples. In Examples, the indication "parts" or "%" is used, and unless otherwise indicated, this represents "parts by mass" or "% by mass".

### (Example 1)

### [Preparation of substrate]

As a transesterification catalyst, 0.05 parts by mass of magnesium acetate hydrate was added to 100 parts by mass of dimethyl telephthalate and 65 parts by mass of ethylene glycol, and transesterification was performed according to an existing method. 0.05 parts by mass of antimony trioxide and 0.03 parts by mass of trimethyl phosphate ester were added to the obtained product. The temperature was then gradually raised, the pressure was reduced, and polymerization was performed under conditions of 280°C and 66.7 Pa (0.5 mmHg) to give a polyethylene telephthalate (PET) resin having an inherent viscosity of 0.70.

The obtained polyethylene telephthalate resin having an inherent viscosity of 0.70 was injected into a biaxial screw extruder, melt-extruded from a T-die at 290°C, and tightly attached to and solidified on a cooling rotary metal roll while electrostatic application was imparted, whereby an unstretched sheet was obtained. The unstretched sheet was then heated to 90°C in a roll stretching machine and longitudinally stretched at 3.5 times, and the following application liquid A for a undercoating layer was applied onto the both surfaces of the longitudinally-stretched film so that the application amount after drying became 0.5 g/m² and passed under hot air at a wind velocity of 10 m/sec and 120°C for 20 seconds to form an intermediate application layer. The intermediate application layer was further heated to 140°C in a tenter and laterally stretched at 3.7 times, and subjected to a heat treatment at 235°C in the width (lateral) direction under 5% relaxation to give a substrate film. The obtained biaxial stretched polyethylene telephthalate film having a undercoating layer had a thickness of 50 µm, a total light transmittance of 90.2% and a haze of 0.5%. The obtained substrate film was defined as Substrate-A.

### <Composition of Application liquid A for undercoating layer>

Ion-exchanged water 50.0% by mass, isopropyl alcohol 28.9% by mass, acryl-melamine resin 10.0% by mass (A-08 manufactured by Nippon Carbide Industry Co., Inc., solid content concentration: 46% by mass), polyester resin 10.0% by mass (Vylonal (registered trademark) MD-1250 manufactured byToyoboCo., Ltd., solid content concentration: 30% by mass), organic particles 1.0% by mass (Epostar (registered trademark) MA1001 manufactured by Nippon Shokubai Co., Ltd.), surfactant 0.1% by mass (Paintad 32 manufactured by Dow Corning).

### [Forming of layer adjacent to substrate]

A corona discharge treatment at 8 w/m²·min was performed on one surface of the above-mentioned substrate film, Substrate-A. The following Application liquid B was applied by a microgravure system so that the application amount of the ethylene-vinyl alcohol copolymer after drying became 0.03 g/m², and passed under hot air at 100°C for 10 m/sec for 10 seconds to stack a undercoating layer.

### <Composition of Application liquid B for forming layer adjacent to substrate>

90 parts by mass of an ethylene-vinyl alcohol copolymer (Exeval (registered trademark) RS2117 manufactured by Kuraray Co., Ltd, an aqueous solution with a solid content of 5% by mass), 0.1 parts by mass of an anionic surfactant S-1 (see the following chemical formula (4)), 100 parts by mass of a 0.5% by mass aqueous solution of Hardener H-1 (see the following chemical formula (4)) and 2 parts by mass of silica microparticles (Seahorster KE-P50 manufactured by Nippon Shokubai Co., Ltd., average particle diameter 0.5 µm, an aqueous dispersion liquid having a solid content of 2% by mass) were added to 800 parts by mass of pure water under mixing to give Application liquid B.

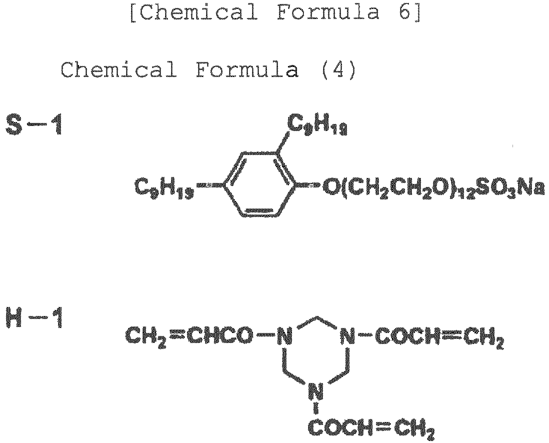

### [Preparation of application liquid for low-refractive index layer]

10.0 parts by mass of a water-soluble resin PVA224 (manufactured by Kuraray Co., Ltd., saponification degree 88%, polymerization degree 1000) was added to 500 parts by mass of pure water under stirring, and 5.0 parts by mass of a water-soluble resin R1130 (manufactured by Kuraray Co., Ltd., a silanol-modified polyvinyl alcohol) was further added and then 2.0 parts by mass of a water-soluble resin AZF8035 (manufactured by Nippon Synthetic Chemical Industry Co., Ltd.) and dissolved by raising the temperature to 70°C under mixing to give an aqueous solution of the water-soluble resins.

Subsequently, the whole amount of the above-mentioned water-soluble resin aqueous solution was added to 350 parts by mass of a 10% by mass acidic silica sol containing silica microparticles having an average particle diameter of 5 nm (Snowtex (registered trademark) OXS, manufactured by Nissan Chemical Industries, Ltd.) and mixed. Furthermore, 0.3 parts by mass of Lupizol (registered trademark) A30 (Manufactured by NOF Corporation) was added as an anionic surfactant, the mixture was stirred for 1 hour and finished to be 1000.0 g with pure water, whereby an application liquid for a low-refractive index layer was prepared.

### <Preparation of titanium oxide sol aqueous dispersion liquid>

30 L of an aqueous solution of sodium hydroxide (concentration 10 mol/L) was added to 10 L of an aqueous suspension liquid containing titanium oxide hydrate suspended in water (TiO₂ concentration 100 g/L) under stirring, the temperature was raised to 90°C, and the product was aged for 5 hours, neutralized with hydrochloric acid, filtered and washed with water. In the above-mentioned reaction (treatment), as the titanium oxide hydrate, titanium oxide hydrate obtained by thermal hydrolysis of an aqueous solution of titanium sulfate according to a well-known technique was used.

The titanium oxide hydrate treated with the base was suspended in pure water so that the TiO₂ concentration became 20 g/L, and citric acid was added thereto by 0.4 mol% with respect to the amount of Tio₂ under stirring, and the temperature was raised. At the time when the liquid temperature had reached 95°C, concentrated hydrochloric acid was added so that the hydrochloric acid concentration became 30 g/L, and the liquid was stirred for 3 hours while the liquid temperature was maintained.

When the pH and zeta potential of the obtained titanium oxide sol liquid were measured, the pH was 1.4 and the zeta potential was + 40 mV. Furthermore, when the particle diameter was measured by a Zetasizer Nano manufactured by Malvern Instruments Ltd., the average particle diameter was 35 nm, and the monodispersibility was 16%. Furthermore, the titanium oxide sol liquid was dried at 105°C for 3 hours to give a particulate powder body, and the X-ray diffraction was measured by using a Type JDX-3530 manufactured by JEOL Ltd. to confirm that the particulate powder body was rutile type particles. Furthermore, the volume average particle diameter was 10 nm.

1 kg of pure water was added to 1 kg of a 20.0% by mass titanium oxide sol aqueous dispersion liquid containing the rutile type titanium oxide microparticles having a volume average particle diameter of 10 nm to give a 10.0% by mass titanium oxide sol aqueous dispersion liquid.

### <Preparation of aqueous silicic acid solution>

An aqueous silicic acid solution having a SiO₂ concentration of 2.0% by mass was prepared.

### <Preparation of silica-modified titanium oxide sol aqueous dispersion liquid>

2 kg of pure water was added to 0.5 kg of the above-mentioned 10.0% by mass titanium oxide sol aqueous dispersion liquid, and the mixture was heated to 90°C. Subsequently, 1.3 kg of the above-mentioned aqueous silicic acid solution was gradually added, and a heating treatment was performed at 175°C for 18 hours in an autoclave. Thereafter the product was further concentrated to give a silica-modified titanium oxide sol aqueous dispersion liquid containing a silica-modified titanium oxide sol, which was titanium oxide having a rutile type structure and a coating layer of SiO₂, by a concentration of 20.0% by mass.

### [Preparation of application liquid for high-refractive index layer]

289 parts by mass of the 20.0% by mass silica-modified titanium oxide particulate sol aqueous dispersion liquid obtained above, 105 parts by mass of a 1.92% by mass citric acid aqueous solution, 20 parts by mass of a 10% by mass aqueous solution of an allyl ether copolymer (Mariarim (registered trademark) AKM-0531 manufactured by NOF Corporation), and 90 parts by mass of a 3% by mass boric acid aqueous solution were mixed to prepare silica-modified titanium oxide sol dispersion liquid.

Subsequently, 20 parts by mass of pure water, and 335 parts by mass of a 5.0% by mass aqueous solution of a polyvinyl alcohol (PVA217, manufactured by Kuraray Co., Ltd.) were added while the above-mentioned silica-modified titanium oxide sol dispersion liquid was stirred. Furthermore, 20 parts by mass of a 1% by mass aqueous solution of an anionic surfactant (Lupizol (registered trademark) A30, manufactured by NOF Corporation) was added, and finally, the whole amount was adjusted to be 1000 parts by mass by using pure water, whereby an application liquid for a high-refractive index layer was prepared.

### [Formation of laminated body]

As an application apparatus, a slide hopper application apparatus capable of simultaneous application of 21 layers was used. The application liquid for a low-refractive index layer and application liquid for a high-refractive index layer prepared above were applied onto the above-mentioned layer adjacent to the substrate by simultaneous multi-layer application in an alternate manner while the temperature was retained at 45°C, to thereby form 21 layers in total, of which the lowermost layer and uppermost layer were low-refractive index layers, and 11 layers were low-refractive index layers and 10 layers were high-refractive index layers. Immediately after that, the layers were set by blowing with cool air for 1 minute under a condition in which the film surface became 15°C or less, and then dried by blowing with hot air of 80°C to form Laminated body (Infrared reflective layer) 1 formed of 21 layers. When the cross-sectional surface of the applied film was observed, the film thickness of the low-refractive index layer was 150 nm, and the film thickness of the high-refractive index layer was 130 nm. Furthermore, the refractive index of the low-refractive index layer was 1.44, and the refractive index of the high-refractive index layer was 1.92.

### [Formation of adhesive layer]

60 parts by mass of ethyl acetate and 20 parts by mass of toluene were mixed, and 20 g of an acrylic adhesive (Arontack M-300, manufactured by Toagosei Co., Ltd.) was added, and the mixture was stirred and mixed, whereby an adhesive application liquid was prepared.

As a separator film, a polyester film having a thickness of 25 µm (Cerapeel (registered trademark), manufactured by Toyo Metallizing Co., Ltd.) was used, and the adhesive application liquid was applied onto this separator film by using a wire bar and dried at 80°C for 2 minutes, thereby a film with an adhesive layer was prepared.

The adhesive layer surface of this film with an adhesive layer was laminated on the surface of the laminated body by a laminating machine. At this time, the tension of the laminated body was set to 10 kg/m, and the tension of the film with an adhesive layer was set to 30 kg/m. By this way, an adhesive layer was formed on the laminated body. As a result of an observation under a SEM, the thickness of the adhesive layer was 20 µm.

### [Forming of infrared absorber-containing hard coat layer]

7.5 parts by mass of a UV-curable hard coating material (UV-7600B, Nippon Synthetic Chemical Industry, Ltd.) was added to 90 parts by mass of a methyl ethyl ketone solvent, and 0.5 parts by mass of a photopolymerization initiator (Irgacure (registered trademark) 184, manufactured by Ciba Specialty Chemicals) was then added, and mixing was performed under stirring. Subsequently, 2 parts by mass of an ATO powder (ultramicroparticulate ATO, manufactured by Sumitomo Metal Mining Co., Ltd.) was added, and the mixture was stirred at a high-speed in a homogenizer, whereby an application liquid for a hard coat layer was prepared.

The application liquid for a hard coat layer was applied by using a wire bar onto the surface of the PET film opposite to the side of the laminated body of the PET film, and dried by hot air at 70°C for 3 minutes. Thereafter curing was performed under atmospheric air by using an UV curing apparatus (a high pressure mercury lamp was used) manufactured by Eye Graphics Co., Ltd. at an irradiation amount of 400 mJ/cm² to form an infrared absorber-containing hard coat layer. As a result of an observation by a SEM, the thickness of the infrared absorber-containing hard coat layer was 3 µm.

By this way, Optical film 1 was produced.

### (Example 2)

Optical film 2 was prepared in a similar manner to Example 1, except that the application amount of the ethylene-vinyl alcohol copolymer was 0.1 g/m².

### (Example 3)

Optical film 3 was prepared in a similar manner to Example 1, except that the application amount of the ethylene-vinyl alcohol copolymer was 1 g/m².

### (Example 4)

Optical film 4 was prepared in a similar manner to Example 1, except that the epoxy-based hardener represented by E-19 in the above-mentioned chemical formula (3) was used instead of the hardener represented by H-1 in the above-mentioned chemical formula (4).

### (Example 5)

Optical film 5 was prepared in a similar manner to Example 4, except that the application amount of the ethylene-vinyl alcohol copolymer was 0.1 g/m².

### (Example 6)

### [Preparation of solution of vinyl monomer-modified aqueous polyester resin]

A transesterification reaction was performed by 35.4 parts by mass of dimethyl telephthalate, 33.63 parts by mass of dimethyl isophthalate, 17.92 parts by mass of sodium dimethyl 5-sulfoisophthalate, 62 parts by mass of ethylene glycol, 0.065 parts by mass of calcium acetate monohydrate salt and 0.022 parts by mass of manganese acetate tetrahydrate salt while methanol was distilled off at 170 to 220°C under a nitrogen airflow, 0.04 parts by mass of trimethyl phosphate, 0.04 parts by mass of antimony trioxide as a polycondensation catalyst and 6.8 parts by mass of 1, 4-cyclohexanedicarboxylic acid were added, and esterification was performed by distilling off water in an approximately theoretical amount at a reaction temperature of from 220 to 235°C. Subsequently, the pressure in the reaction system was reduced over about 1 hour, the temperature was raised, and polycondensation was finally performed at 280°C and 133 Pa or less for about 1 hour, whereby an aqueous polyester was prepared. The inherent viscosity of the obtained aqueous polyester was 0.33.

Subsequently, 850 ml of pure water was added to a 2 L three-necked flask equipped with a stirring blade, a reflux condenser and a thermometer, and 150 g of the aqueous polyester was gradually added while the stirring blade was rotated. The mixture was directly stirred at room temperature for 30 minutes, heated over 1.5 hours so that the inner temperature became 98°C, and dissolved by heating at this temperature for 3 hours. After the heating had been completed, the product was cooled to room temperature over 1 hour and left overtime, whereby 15% by mass of an aqueous polyester resin was prepared.

### [Preparation of vinyl monomer-modified aqueous polyester resin solution]

1,900 ml of the above-mentioned 15% by mass aqueous polyester solution is put into a 3 L four-necked flask equipped with a stirring blade, a reflux condenser, a thermometer and a dropping funnel and heated so that the inner temperature becomes 80°C while the stirring blade is stirred. 6.52 ml of a 24% aqueous solution of ammonium peroxide was added to this, a monomer mixed liquid (35.7 g of ethyl acrylate and 35.7 g of methyl methacrylate) is added dropwise over 30 minutes, and the reaction is further continued for 3 hours. Thereafter the product was cooled to 30°C or less and filtered, whereby a vinyl monomer-modified aqueous polyester resin solution having a solid content concentration of 18% by mass was prepared.

Optical film 6 was prepared in a similar manner to Example 1, except that the vinyl monomer-modified aqueous polyester resin was incorporated by 30 parts by mass as a solid content in the Application liquid B for forming the above-mentioned layer adjacent to the substrate.

### (Example 7)

Optical film 7 was prepared in a similar manner to Example 2, except that 200 parts by mass of an ethylene-vinyl alcohol copolymer (Exeval (registered trademark) RS2117 manufactured by Kuraray Co . , Ltd. , an aqueous solution having a solid content of 5% by mass) instead of the water-soluble resin PVA224, and that the pure water was changed to 310 parts by weight in the preparation of the above-mentioned application liquid for a low-refractive index layer.

### (Example 8)

200 parts by mass of an ethylene-vinyl alcohol copolymer (Exeval (registered trademark) RS2117 manufactured by Kuraray Co., Ltd., an aqueous solution having a solid content of 5% by mass) was used in a similar manner to Example 7 in the preparation of the above-mentioned application liquid for a low-refractive index layer to prepare an application liquid for a low-refractive index layer for the lowermost layer of a laminated body, together with the above-mentioned application liquid for a low-refractive index layer.

Optical film 8 was prepared in a similar manner to Example 2, except that simultaneous multi-layer application was performed by using the application liquid for a low-refractive index lowermost layer, the application liquid for a high-refractive index layer and the application liquid for a low-refractive index layer prepared above.

### (Example 9)

200 parts by mass of an ethylene-vinyl alcohol copolymer (Exeval (registered trademark) RS2117 manufactured by Kuraray Co., Ltd., an aqueous solution having a solid content of 5% by mass) was used instead of the water-soluble resin PVA224 in the preparation of the above-mentioned application liquid for a low-refractive index layer. Furthermore, 335 parts by mass of an ethylene-vinyl alcohol copolymer (Exeval (registered trademark) RS2117 manufactured by Kuraray Co., Ltd., an aqueous solution having a solid content of 5% by mass) was used instead of the polyvinyl alcohol (PVA217, manufactured by Kuraray Co., Ltd.) in the preparation of the above-mentioned high-refractive index layer application liquid.

Optical film 9 was prepared in a similar manner to Example 2, except for the above-mentioned points.

### (Example 10)

A substrate film obtained by performing lateral stretching and a heat treatment in a similar manner to Example 1 except that Application liquid A for a undercoating layer was not applied in the preparation of a substrate described in Example 1 was set as Substrate-B.

A corona discharge treatment at 8 W/m²/min was performed on the both surfaces of Substrate-B obtained above, and the following Application liquid a for a undercoating layer was applied onto one surface so that the Wet film thickness became 10 µm and dried at 180°C for 4 minutes.

Optical film 10 was prepared in a similar manner to Example 1, except that the substrate was prepared by such way, and that the application amount of the ethylene-vinyl alcohol copolymer was 0.07 g/m².

Composition of application liquid a for undercoating layer
21 parts by mass of a tercopolymer latex in which styrene/glycidyl methacrylate/butyl acrylate = 20/40/40 (mass ratio) (solid content 56% by mass, Tg = 0°C),
210 parts by mass of a tercopolymer latex in which styrene/glycidyl methacrylate/butyl acrylate = 20/40/40 (mass ratio) (solid content 30% by weight, Tg = 75°C), and
0.6 parts by mass of an anionic surfactant S-1, were added to 700 parts by mass of pure water under mixing, whereby Application liquid for a primer was obtained.

The above-mentioned tercopolymer latex was prepared by a generally-known emulsification polymerization process.

### (Example 11)

Optical film 11 was prepared in a similar manner to Example 2, except that the hardener was not used.

### (Example 12)

Optical film 12 was prepared in a similar manner to Example 8, except that a laminated body was directly disposed on Substrate A described in the above-mentioned Example 1.

### (Example 13)

Optical film 13 was prepared in a similar manner to Example 12, except that an application liquid for forming the low-refractive index layer adjacent to the substrate was prepared by using the vinyl monomer-modified aqueous polyester resin synthesized in Example 6 instead of the ethylene-vinyl alcohol copolymer (Exeval (registered trademark) RS2117 manufactured by Kuraray Co., Ltd., an aqueous solution having a solid content of 5% by mass), and used.

### (Comparative Example 1)

Optical film 14 was prepared in a similarmanner to Example 1, except that the layer adjacent to the substrate was not formed.

### (Comparative Example 2)

Optical film 15 was prepared in a similar manner to Example 2, except that 4.5 parts by mass of gelatin was added instead of the ethylene-vinyl alcohol copolymer in Application liquid B for the layer adjacent to the substrate.

### (Evaluation)

### <Evaluation of infrared reflectance>

The reflectance in the region from 850 to 1150 nm of the optical film attached to a float sheet glass having a thickness of 3 mm was measured by using a spectrometer (an integrating sphere is used, Type V-670, manufactured by JASCO Corporation). The sample was disposed so that the light during the measurement enters from the glass surface. The measurements were performed three times, and the average value thereof was obtained and deemed as an infrared reflectance.

Furthermore, as promotion of forced deterioration, the film was exposed under the irradiation condition and rainfall condition described in JIS A5759: 1982 for 2,000 hours by using a Sunshine Weather Meter manufactured by Suga Test Instruments Co., Ltd., and thereafter the infrared reflectance was measured in a similar manner. A film in which the lowering of the reflectance is small before and after forced deterioration is an optical film having higher durability, and the optical film is suitable for practical use if the difference in reflectance before and after forced deterioration is 5 or less.

### <Measurement of color difference ΔE (L*a*b* value) >

The rear surface on the measurement side of each optical film was subjected to a surface roughening treatment by using the above-mentioned spectrometer, and a light absorbing treatment was performed by using a black spray to prevent the reflection of light on the rear surface. A L*a*b* value was obtained from the results of the measurement of the reflectances in the visible ray region (360 nm to 740 nm) of the center part and edge part after the above-mentioned forced deterioration, and the color difference was calculated by the formula ΔE = [(Δa*)² + (Δb*)² + (ΔL*)²]^{1/2}.

### <Tight adhesion property>

The crosscut tight adhesion property was evaluated in accordance with the description on JIS K 5600, 5.6 (Version 2004). 100 cuts in the forms of crosscuts, 1 mm square each, which penetrated the laminated body and reached the substrate, were made with a cutter knife by using a cutter guide with 1 mm intervals from one side of the obtained optical film, and a cellophane adhesive tape ("CT405AP-18" manufactured by Nichiban Co., Ltd., 18 mm width) was cut and attached to the cut surface. Thereafter the tape was completely attached by rubbing the tape from the upper surface with an eraser, and the tape was peeled off by pulling in the vertical direction, and the degree of the remaining of the laminated body and layer adjacent to the substrate on the surface of the substrate was visually confirmed.

The number of peeling in 100 cuts was examined and evaluated according to. the following criteria.
○: the number of peeling was lower than 5
OΔ: the number of peeling was 5 to 10
Δ: the number of peeling was 11 to 20 (Δ or more is at a level of practical use)
×: the number of peeling was 21 or more

The constitutions and evaluation results of the optical films obtained in the respective Examples and the respective Comparative Examples are respectively shown in Table 1.

**[Table 1]**

| | | Undercoating layer for substrate | Layer adjacent to substrate (layer other than laminated body) | | | | Low reflective index layer | High reflective index layer | Color difference ΔE | Infrared reflectivity (%) | | Tight adhesion property |
|---|---|---|---|---|---|---|---|---|---|---|---|---|
| | | | Modified polyvinyl alcohol | | Aqueous polyester resin | Film hardener | | | | Before forced deterioration | After forced deterioration | |
| | | | Type | Application amount (g/m²) | | | | | | | | |
| Example 1 | Optical film 1 | In-line undercoating | EVOH*¹ | 0.03 | Absent | H-1 | A*² | A*⁵ | 1.8 | 88 | 87 | ○ |
| Example 2 | Optical film 2 | In-line undercoating | EVOH | 0.1 | Absent | H-1 | A | A | 1.2 | 90 | 89 | ○ |
| Example 3 | Optical film 3 | In-line undercoating | EVOH | 1.0 | Absent | H-1 | A | A | 1.4 | 89 | 87 | ○ |
| Example 4 | Optical film 4 | In-line undercoating | EVOH | 0.03 | Absent | E-19 | A | A | 2.1 | 87 | 85 | ○ |
| Example 5 | Optical film 5 | In-line undercoating | EVOH | 0.1 | Absent | E-19 | A | A | 1.3 | 89 | 86 | ○ |
| Example 6 | Optical film 6 | In-line undercoating | EVOH | 0.1 | Present | H-1 | A | A | 0.6 | 90 | 90 | ○ |
| Example 7 | Optical film 7 | In-line undercoating | EVOH | 0.1 | Absent | H-1 | B*³ | A | 0.14 | 90 | 90 | ○ |
| Example 8 | Optical film 8 | In-line undercoating | EVOH | 0.1 | Absent | H-1 | B for only lowermost layer | A | 0.14 | 90 | 90 | ○ |
| Example 9 | Optical film 9 | In-line undercoating | EVOH | 0.1 | Absent | H-1 | B | B*⁶ | 0.1 | 89 | 89 | ○ |
| Example 10 | Optical film 10 | In-line undercoating | EVOH | 0.07 | Present | H-1 | A | A | 0.15 | 89 | 89 | ○ |
| Example 11 | Optical film 11 | In-line undercoating | EVOH | 0.1 | Absent | Absent | A | A | 1.3 | 88 | 81 | ○Δ |
| Example 12 | Optical film 12 | In-line undercoating | - | - | - | - | B for only lowermost layer | A | 0.7 | 89 | 84 | Δ |
| Example 13 | Optical film 13 | In-line undercoating | - | - | - | - | C*⁴ for only lowermost layer | A | 0.8 | 89 | 83 | Δ |
| Comparative Example 1 | Optical film 14 | In-line undercoating | - | - | - | - | A | A | 8 | 88 | 61 | × |
| Comparative Example 2 | Optical film 15 | In-line undercoating | Gelatin | 0.1 | Absent | H-1 | A | A | 7 | 88 | 70 | × |

| | | | | | | | | | | | | |
|---|---|---|---|---|---|---|---|---|---|---|---|---|
| *1) An ethylene-vinyl alcohol copolymer *2) A layer containing a polyvinyl alcohol as a water-soluble polymer *3) A layer containing an ethylene-vinyl alcohol copolymer as a water-soluble polymer *4) A layer containing a vinyl monomer-modified aqueous polyester resin as a water-soluble polymer *5) A layer containing a polyvinyl alcohol as a water-soluble polymer *6) A layer containing an ethylene-vinyl alcohol copolymer as a water-soluble polymer | | | | | | | | | | | | |

As is apparent from the results in the above-mentioned Table 1, the optical films of the present invention in which the layer adj acent to the substrate contains at least one selected from the group consisting of a modified polyvinyl alcohol and a vinyl monomer-modified aqueous polyester resin show small change in color over time and are excellent in infrared reflectance and durability.

The present application is based on Japanese Patent Application No. 2012-13006 filed on January 25, 2012, and the content of the disclosure thereof is herein entirely incorporated by reference.

## Claims

1. An optical film having a laminated body comprising a high-refractive index layer and a low-refractive index layer on a substrate,
wherein a layer adjacent to the substrate comprises at least one selected from the group consisting of a modified polyvinyl alcohol and an aqueous polyester resin modified with a vinyl monomer.

2. The optical film according to claim 1, wherein the layer adjacent to the substrate is a layer other than the laminated body.

3. The optical film according to claim 2, wherein the layer adjacent to the substrate comprises the modified polyvinyl alcohol, and the application amount of the modified polyvinyl alcohol in the layer adjacent to the substrate is from 0.01 to 1 g/m².

4. The optical film according to any one of claims 1 to 3, wherein the layer adjacent to the substrate further comprises a hardener.

5. The optical film according to claim 4, wherein the hardener is an acrylamide-based hardener or an epoxy-based hardener.

6. An infrared shielding body being formed by being provided with the optical film set forth in any one of claims 1 to 5, disposed on at least one surface of a base structure.
